# EUROPEAN PATENT SPECIFICATION

(11) **EP 1 876 503 B1**
(45) Date of publication and mention of the grant of the patent: **20.04.2011**
(21) Application number: 07013016.6
(22) Date of filing: 03.07.2007
(51) Int. Cl.: G05B 19/4093

(54) **Device, program, recording medium and method for preparing robot program**
Vorrichtung, Programm, Aufzeichnungsmittel und Verfahren zur Erzeugung eines Roboterprogramms
Dispositif, programme, support d'enregistrement et procédé pour la création d'un programme de robot

(30) Priority: 04.07.2006 JP 2006184609
(43) Date of publication of application: 09.01.2008
(73) Proprietor: FANUC CORPORATION, Oshino-mura Minamitsuru-gun Yamanashi 401-0597 (JP)
(72) Inventor: Nihei, Ryo, Fujiyoshida-shi Yamanashi 403-0005 (JP); Kato, Tetsuaki, Hadano-shi Kanagawa 259-1326 (JP); Nishi, Hiroji, Minamitsuru-gun Yamanashi 401-0301 (JP)
(74) Representative: Thum, Bernhard

(56) References cited:
- EP-A2- 1 533 087
- US-A- 5 513 299
- SWAMINATHAN A ET AL: "APE: AN EXPERIENCE-BASED ASSEMBLY SEQUENCE PLANNER FOR MECHANICAL ASSEMBLIES" PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 May 1995 (1995-05-21), pages 1278-1283, XP000701568 ISBN: 978-0-7803-1966-0

## Description

### BACKGROUND OF THE INVENTION

### 1. Field of the Invention

The present invention relates to a robot programming device for preparing a carrying operation program for a workpiece performed by a robot. The present invention also relates to a program and a recording medium, used for preparing a carrying operation program for a workpiece performed by a robot. The present invention further relates to a robot programming method for preparing a carrying operation program for a workpiece performed by a robot.

### 2. Description of the Related Art

In a manufacturing system, an industrial robot (hereinafter referred to simply as a robot) is used for various operations, such as welding or processing of a workpiece, assembling of members or appliances, loading or unloading of a workpiece relative to a processing machine, handling of a workpiece between several processes, etc., and thereby contributes to a high degree of automatization of the manufacturing system. In the operations, the robot is provided with tools (or end effectors) attached to the wrist end of the robot correspondingly to the contents of operations, and operates so as to follow a certain operation program (or a task program).

In various operations performed by a robot in a manufacturing system, it is known that a workpiece retainer (that may be referred to simply as a jig) for securely retaining a workpiece is provided at a predetermined location in a working space, and that a robot with a hand (or a holding tool) attached thereto operates to hold a workpiece by the hand and carries the workpiece between designated locations while being accompanied by a mounting or demounting motion for the workpiece relative to the workpiece retainer. For example, in a welding robot system, it is known that a carrying robot operates to carry a plurality of workpieces (such as vehicle body panels) from a pallet to a workpiece retainer, and a welding robot welds the workpieces in a state where the workpieces are assembled together and secured onto the workpiece retainer. Also, in an assembling operation of parts or appliances, it is known that a robot operates to mount and secure one member onto a workpiece retainer, and the same robot operates to assemble and bolt a different member to the retained member. Further, in a workpiece loading/unloading operation relative to a processing machine, it is known that a handling robot operates to mount a raw workpiece taken out from a pallet onto a workpiece retainer (e.g., a chuck) provided in the processing machine, or demount a processed workpiece from the workpiece retainer of the processing machine and place it on the other pallet.

In the above-described workpiece carrying system performed by the robot, it is required that the workpiece retainer includes a retaining section (typically, constituted by an abutment surface and a clamp element) having a shape and structure conforming to the shape of the workpiece, so as to firmly and stably retain the workpiece to be operated. Similarly, it is required that the hand attached to the robot includes a finger (or a fingertip directly contacting the workpiece) having a shape and structure conforming to the shape of the workpiece, so as to firmly and stably hold the workpiece to be operated. If there are many types of workpieces, a hand capable of changing fingers or increasing/decreasing the number of fingers may be used.

Further, when the workpiece retainer and/or the hand (or the finger) is designed to conform to the shape of the workpiece, it is important to take into consideration mutual interference between the workpiece retainer and the hand (or the finger). Typically, the workpiece retainer includes, as the retaining section capable of firmly and stably retaining the workpiece, a plurality of abutment surfaces adapted to be abutted to the surface of the workpiece and a plurality of clamps adapted to press and fix the workpiece onto the abutment surfaces. The robot is required to mount the workpiece held by the hand onto the workpiece retainer in a manner so as to bring the workpiece simultaneously into contact with the abutment surfaces of the workpiece retainer, and it is necessary to prevent the workpiece retainer (in particular, the clamps) and the hand (or the finger) from causing interference therebetween, when the workpiece abutted to the abutment surfaces is secured by the clamps, as well as when the workpiece is released and the hand is retracted.

In order to properly mount the workpiece to the workpiece retainer, it is required to optimize the workpiece holding orientation of the robot, which is determined by the motion for holding the workpiece by the hand. Also, the orientation of the robot, at an instant when the hand holds the workpiece retained by the workpiece retainer, affects the subsequent operation of the robot. Thus, the shape of the workpiece and the shapes and structures of the workpiece retainer and of the hand (e.g., the number and arrangement of the abutment surfaces and the clamps, the number and arrangement of the fingers, etc.) are closely related to each other, and are also related to the motion of the robot, such as moving back and forth of the hand or mounting or demounting of the workpiece relative to the workpiece retainer, etc.

The design of the workpiece retainer is also related to the processing work for a workpiece retained by the workpiece retainer. For example, when spot or arc welding is performed on the workpiece retained by the workpiece retainer, it is difficult to abut the area to be welded of the workpiece on the abutment surfaces or fix it by clamps. Also in the loading/unloading operation for the workpiece relative to the processing machine, it is difficult to retain the surface to be processed of the workpiece by the workpiece retainer (or the chuck).

Typically, in a manufacturing system, it is required to manufacture several types of products for identical equipment. In order to meet this requirement, if a new workpiece having a shape different from a shape previously expected to a workpiece to be processed is introduced into the manufacturing system, it is also necessary for a workpiece carrying operation performed by the robot, to newly design the workpiece retainer and/or the robot hand (or the finger) to conform to the shape of the new workpiece. At this time, in order to prepare a carrying operation program performed by the robot for the new workpiece, consideration a series of operation steps for the new workpiece is necessary to comprehensively investigate the position and orientation of the workpiece retained by the workpiece retainer (which is in association with a clamping or chucking position defined on the workpiece), the position and orientation of the hand at an instant when the hand holds the workpiece (which is in association with a fingertip position defined on the workpiece), the path of the workpiece mounting or demounting motion of the robot relative to the workpiece retainer, etc. Thus, every time a new workpiece is introduced into the manufacturing system, the workpiece retainer and the robot hand (or the finger) should be suitably designed, and the carrying operation program for commanding the workpiece carrying operation of the robot should be suitably prepared.

In general, a skilled operator, experienced in launching various manufacturing systems, carries out the designing of the workpiece retainer and the robot hand (or the finger) and the preparation of the workpiece carrying operation program performed by the robot while taking into account the shape of a workpiece to be operated and/or the contents of a series of operation steps. The skilled operator takes the above measures in a suitable way depending on whether or not differences exist in the workpieces or operation steps, and it is difficult to generalize such a technique of the skilled operator for other persons. Therefore, it takes time to train operators and there is a chronic shortage of skilled operators, which results in hampering the automation of the manufacturing system by using a robot.

As a technique for reducing the workload of an operator when an operation program for a robot is prepared so as to correspond to the shape of a workpiece or operation steps, an offline programming for automatically preparing the operation program based on the shape data of the workpiece is known. For example, Japanese Unexamined Patent Publication (Kokai) No. 6-59720 (JP-A-6-59720) discloses a method for generating a deburring robot program for making a robot with a deburring tool attached thereto perform a deburring operation. In this program generating method, graphic data for the deburring operation is first selected from the graphic data of a product, stored in a CAD system, and is input to a microprocessor. Based on data of elements constituting the graphic, such as a straight line, circular arc, etc., the microprocessor calculates tool orientations at respective taught points and stores the tool orientations so as to automatically generate a teaching program for the robot.

On the other hand, Japanese Unexamined Patent Publication (Kokai) No. 10-187223 (JP-A-10-187223) discloses a system of automatically generating a welding program using a CAD/CAM system in order to weld a complex shaped workpiece by using a plurality of welding robots. In this program generation system, a workpiece model is generated from workpiece shape information in CAD data registered in the CAD/CAM system, a weld model is generated from weld line information in the CAD data, and cell models are generated by dividing the workpiece model by a region dividing line for defining an operational area of the welding robot. Here, with regard to each basic weld line, it is determined whether or not interference is caused between the workpiece and the welding robot, and if the interference is caused, a weld line shortened to eliminate the interference is generated. Then, with regard to each region divided by the region dividing lines, the welding direction, welding order and welding path for the weld line are determined. Further, by using geometrical characteristics of the CAD data, an operation sequence referred to as an operation pattern and previously stored as a database is selected to provide necessary data for the welding, and thereby a series of operation programs are generated.

As already described, in order to prepare a carrying operation program for making a robot with a hand attached thereto perform a workpiece carrying operation including at least one of a mounting motion and a demounting motion for a workpiece relative to a workpiece retainer, it is necessary to design the workpiece retainer and the robot hand (or the finger) and to comprehensively investigate the position and orientation of the workpiece retained by the workpiece retainer, the position and orientation of the hand at an instant when the hand holds the workpiece, the path of the workpiece mounting or demounting motion of the robot relative to the workpiece retainer, and so on, while taking into account the shape of a workpiece to be operated and/or the contents of a series of operation steps. In this regard, the programming techniques disclosed in JP-A-6-59720 and JP-A-10-187223 described above can be applied only to a configuration such that a point on the workpiece, adapted to be subjected to the operation of the robot, can be relatively easily determined on the basis of the shape data of the workpiece, such as deburring or welding. On the other hand, in the workpiece carrying operation program, it is necessary to use position and orientation data that is inconvenient to be determined based on only the shape data of the workpiece, such as the position and orientation of the workpiece retained by the workpiece retainer, or the position and orientation of the hand at an instant when the hand holds the workpiece, for defining the motion of the robot. Therefore, it is difficult to automatically prepare the workpiece carrying operation program by the programming techniques disclosed in JP-A-6-59720 and JP-A-10-187223.

EP 1 533 087 discloses an operation program preparation device capable of reducing labour and cost for preparation of a robot operation program. Work operations of a robot includes work operations that are common to individual workpieces or operation objects and independent of workpiece type, and work operations that vary depending on workpiece. Operation-program definition data are set and stored, which includes a first program part requiring workpiece-dependent alteration and a second program part not depending on workpiece type. Workpiece-type related data representing workpiece position/orientation information is input and stored. In accordance with the first program part not having been subject to the workpiece-dependent alteration and the workpiece-type related data, the first program part is subject to alteration to complete the first program part, whereby the entire operation program is completed. As for a new workpiece, the operation program can be prepared only by inputting workpiece-type related data, making it possible to prepare the operation program adapted to various types of workpiece.

Swaminathan A, etl al, "APE: An Experience-based Assembly Sequence Planner for Mechanical Assemblies" Proceedings of the International Conference on Robotics and Automation; Nagoya, JP, May 21-27, 1995, discloses a planner for reusing assembly sequence plans by analyzing steps of an assembly process and recognizing previously stored plans which can be reused or modified for reuse.

### SUMMARY OF THE INVENTION

It is an object of the present invention to provide a robot programming device for preparing a carrying operation program for making a robot with a hand attached thereto perform a workpiece carrying operation including at least one of a mounting motion and a demounting motion for a workpiece relative to a workpiece retainer, which can easily and reliably prepare the carrying operation program optimal for a new workpiece, by a reduced number of steps without requiring an operator's skill.

It is another object of the present invention to provide a program and a computer readable recording medium recording the program, for making a computer function so as to prepare a carrying operation program for making a robot with a hand attached thereto perform a workpiece carrying operation including at least one of a mounting motion and a demounting motion for a workpiece relative to a workpiece retainer, which can easily and reliably prepare the carrying operation program optimal for a new workpiece, by a reduced number of steps without requiring an operator's skill.

It is a further object of the present invention to provide a robot programming method for preparing, by using a computer, a carrying operation program for making a robot with a hand attached thereto perform a workpiece carrying operation including at least one of a mounting motion and a demounting motion for a workpiece relative to a workpiece retainer, which can easily and reliably prepare the carrying operation program optimal for a new workpiece, by a reduced number of steps without requiring an operator's skill.

To accomplish the above object, the present invention provides a robot programming device for preparing a carrying operation program for making a robot with a hand attached thereto perform a workpiece carrying operation, the workpiece carrying operation including at least one of a mounting motion and a demounting motion for a workpiece relative to a workpiece retainer, comprising a workpiece-feature obtaining section obtaining workpiece feature information representing a geometrical feature of a workpiece from a three-dimensional shape data of the workpiece; a retainer-position obtaining section obtaining relative position information between a workpiece and a workpiece retainer at an instant when the workpiece is mounted to the workpiece retainer; a hand-position obtaining section obtaining relative position information between a workpiece and a hand at an instant when the hand holds the workpiece; a storing section storing the workpiece feature information obtained by the workpiece-feature obtaining section, the relative position information between the workpiece and the workpiece retainer obtained by the retainer-position obtaining section and the relative position information between the workpiece and the hand obtained by the hand-position obtaining section, as a set of obtained data defined by correlating these three types of information with each other, and also storing a plurality of sets of the obtained data with regard to a plurality of types of workpieces; an obtained-data retrieving section retrieving optimal obtained data, from among the plurality of sets of obtained data stored in the storing section, by using new-workpiece feature information obtained from three-dimensional shape data of a new workpiece, the optimal obtained data including the workpiece feature information having a highest degree of coincidence with the new-workpiece feature information; and a program generating section generating a carrying operation program for the new workpiece by using the optimal obtained data retrieved by the obtained-data retrieving section.

The above robot programming device may further comprise a motion-pattern obtaining section obtaining a motion-pattern command value commanding at least one of a mounting motion and a demounting motion for the workpiece relative to the workpiece retainer. In this arrangement, the storing section stores the motion-pattern command value obtained by the motion-pattern obtaining section in a manner so as to be correlated, as the set of obtained data, with the workpiece feature information, the relative position information between the workpiece and the workpiece retainer and the relative position information between the workpiece and the hand.

The above robot programming device may further comprise a fingertip-shape obtaining section obtaining three-dimensional shape data of a fingertip of the hand. In this arrangement, the storing section stores the three-dimensional shape data of the fingertip of the hand obtained by the fingertip-shape obtaining section in a manner so as to be correlated, as the set of obtained data, with the workpiece feature information, the relative position information between the workpiece and the workpiece retainer and the relative position information between the workpiece and the hand.

The above robot programming device may further comprise a hand-drawing obtaining section obtaining drawing data of the hand. In this arrangement, the storing section stores the drawing data of the hand obtained by the hand-drawing obtaining section in a manner as to be correlated, as the set of obtained data, with the workpiece feature information, the relative position information between the workpiece and the workpiece retainer and the relative position information between the workpiece and the hand.

The above robot programming device may further comprise a retainer-drawing obtaining section obtaining drawing data of the workpiece retainer. In this arrangement, the storing section stores the drawing data of the workpiece retainer obtained by the retainer-drawing obtaining section in a manner as to be correlated, as the set of obtained data, with the workpiece feature information, the relative position information between the workpiece and the workpiece retainer and the relative position information between the workpiece and the hand.

The above robot programming device may further comprise a workpiece-shape obtaining section obtaining three-dimensional shape data of the workpiece. In this arrangement, the storing section stores the three-dimensional shape data of the workpiece obtained by the workpiece-shape obtaining section in a manner as to be correlated, as the set of obtained data, with the workpiece feature information, the relative position information between the workpiece and the workpiece retainer and the relative position information between the workpiece and the hand. Also, the program generating section corrects the relative position information between the workpiece and the workpiece retainer and the relative position information between the workpiece and the hand, both included in the optimal obtained data retrieved by the obtained-data retrieving section, based on a difference between the three-dimensional shape data of the workpiece included in the optimal obtained data and three-dimensional shape data of the new workpiece, and generates the carrying operation program for the new workpiece by using these two corrected versions of relative position information.

In the above robot programming device, the workpiece-feature obtaining section may obtain, as the workpiece feature information, workpiece-shape transition information representing a change in a shape of the workpiece in a time series fashion; and the obtained-data retrieving section may retrieve the optimal obtained data by using, as the new-workpiece feature information, new workpiece-shape transition information representing a change in a shape of the new workpiece in a time series fashion.

The present invention also provides a program for a robot programming, used for preparing a carrying operation program for making a robot with a hand attached thereto perform a workpiece carrying operation including at least one of a mounting motion and a demounting motion for a workpiece relative to a workpiece retainer, the program making a computer function as (i) a workpiece-feature obtaining section obtaining workpiece feature information representing a geometrical feature of a workpiece from a three-dimensional shape data of the workpiece; (ii) a retainer-position obtaining section obtaining relative position information between a workpiece and a workpiece retainer at an instant when the workpiece is mounted to the workpiece retainer; (iii) a hand-position obtaining section obtaining relative position information between a workpiece and a hand at an instant when the hand holds the workpiece; (iv) a storing section storing the workpiece feature information obtained by the workpiece-feature obtaining section, the relative position information between the workpiece and the workpiece retainer obtained by the retainer-position obtaining section and the relative position information between the workpiece and the hand obtained by the hand-position obtaining section, as a set of obtained data defined by correlating these three types of information with each other, and also storing a plurality of sets of the obtained data with regard to a plurality of types of workpieces; (v) an obtained-data retrieving section retrieving optimal obtained data, from among the plurality of sets of obtained data stored in the storing section, by using new-workpiece feature information obtained from three-dimensional shape data of a new workpiece, the optimal obtained data including the workpiece feature information having a highest degree of coincidence with the new-workpiece feature information; and (vi) a program generating section generating a carrying operation program for the new workpiece by using the optimal obtained data retrieved by the obtained-data retrieving section.

The present invention also provides a computer readable recording medium, used for preparing a carrying operation program for making a robot with a hand attached thereto perform a workpiece carrying operation including at least one of a mounting motion and a demounting motion for a workpiece relative to a workpiece retainer, the recording medium recording a program for a robot programming and for making a computer function as (i) a workpiece-feature obtaining section obtaining workpiece feature information representing a geometrical feature of a workpiece from a three-dimensional shape data of the workpiece; (ii) a retainer-position obtaining section obtaining relative position information between a workpiece and a workpiece retainer at an instant when the workpiece is mounted to the workpiece retainer; (iii) a hand-position obtaining section obtaining relative position information between a workpiece and a hand at an instant when the hand holds the workpiece; (iv) a storing section storing the workpiece feature information obtained by the workpiece-feature obtaining section, the relative position information between the workpiece and the workpiece retainer obtained by the retainer-position obtaining section and the relative position information between the workpiece and the hand obtained by the hand-position obtaining section, as a set of obtained data defined by correlating these three types of information with each other, and also storing a plurality of sets of the obtained data with regard to a plurality of types of workpieces; (v) an obtained-data retrieving section retrieving optimal obtained data, from among the plurality of sets of obtained data stored in the storing section, by using new-workpiece feature information obtained from three-dimensional shape data of a new workpiece, the optimal obtained data including the workpiece feature information having a highest degree of coincidence with the new-workpiece feature information; and (vi) a program generating section generating a carrying operation program for the new workpiece by using the optimal obtained data retrieved by the obtained-data retrieving section.

The present invention also provides a robot programming method for preparing, by using a computer, a carrying operation program for making a robot with a hand attached thereto perform a workpiece carrying operation, the workpiece carrying operation including at least one of a mounting motion and a demounting motion for a workpiece relative to a workpiece retainer, the method comprising obtaining, by a workpiece-feature obtaining section of a computer, workpiece feature information representing a geometrical feature of a workpiece from a three-dimensional shape data of the workpiece; obtaining, by a retainer-position obtaining section of a computer, relative position information between a workpiece and a workpiece retainer at an instant when the workpiece is mounted to the workpiece retainer; obtaining, by a hand-position obtaining section of a computer, relative position information between a workpiece and a hand at an instant when the hand holds the workpiece; storing, by a storing section of a computer, the workpiece feature information obtained by the workpiece-feature obtaining section, the relative position information between the workpiece and the workpiece retainer obtained by the retainer-position obtaining section and the relative position information between the workpiece and the hand obtained by the hand-position obtaining section, as a set of obtained data defined by correlating these three types of information with each other, and also storing a plurality of sets of the obtained data with regard to a plurality of types of workpieces; retrieving, by an obtained-data retrieving section of a computer, optimal obtained data, from among the plurality of sets of obtained data stored in the storing section, by using new-workpiece feature information obtained from three-dimensional shape data of a new workpiece, the optimal obtained data including the workpiece feature information having a highest degree of coincidence with the new-workpiece feature information; and generating, by a program generating section of a computer, a carrying operation program for the new workpiece by using the optimal obtained data retrieved by the obtained-data retrieving section.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a functional block diagram showing a basic configuration of a robot programming device according to the present invention;
Fig. 2 is a functional block diagram showing a first development of the robot programming device of Fig. 1;
Fig. 3 is a functional block diagram showing a second development of the robot programming device of Fig. 1;
Fig. 4 is a functional block diagram showing a third development of the robot programming device of Fig. 1;
Fig. 5 is a functional block diagram showing a fourth development of the robot programming device of Fig. 1;
Fig. 6 is a functional block diagram showing a fifth development of the robot programming device of Fig. 1;
Fig. 7 is a schematic view showing entirely a manufacturing system using a robot, incorporating therein a robot programming device according to an embodiment of the present invention;
Fig. 8 is a block diagram showing a configuration of a control system in the manufacturing system of Fig. 7;
Fig. 9 is an illustration showing a memory of a control device in the control system of Fig. 8;
Fig. 10 is an illustration showing a hard disk device of the robot programming device in the control system of Fig. 8;
Fig. 11 is a perspective view showing an example of a workpiece retainer used in the manufacturing system of Fig. 7, together with a workpiece;
Fig. 12 is a perspective view showing an example of a hand used in the manufacturing system of Fig. 7, together with the workpiece and the workpiece retainer;
Fig. 13 is a flow chart showing a procedure of a workpiece carrying operation performed by a robot in the manufacturing system of Fig. 7;
Fig. 14 is a flow chart showing a procedure of a workpiece carrying operation performed by a robot in the manufacturing system of Fig. 7;
Fig. 15 is a flow chart showing a procedure of a workpiece carrying operation performed by a robot in the manufacturing system of Fig. 7;
Fig. 16 is an illustration showing by way of example a CSG model of a workpiece, used in a robot programming method according to an embodiment of the present invention; and
Fig. 17 is an illustration showing by way of example workpiece-shape transition information, as using a CSG model, used in a robot programming method according an embodiment of the present invention.

### DETAILED DESCRIPTION

The embodiments of the present invention are described below, in detail, with reference to the accompanying drawings. In the drawings, the same or similar components are denoted by common reference numerals.

In the following description, unless otherwise specified, terms involving position, such as "relative position", "absolute position", "reference position" and the like, generically mean both position and orientation.

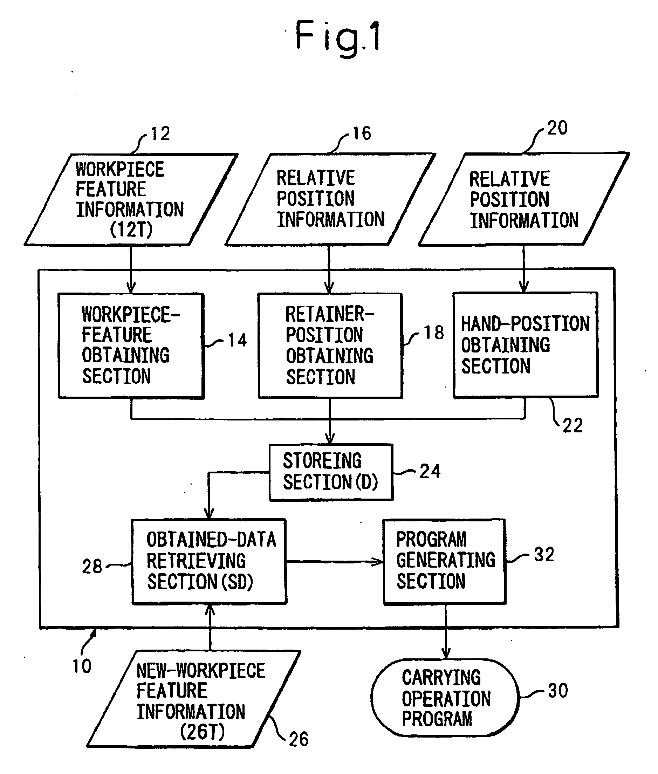

Referring to the drawings, Fig. 1 shows, by a functional block diagram, a basic configuration of a robot programming device 10 according to the present invention. The robot programming device 10 has a characteristic configuration as described below, for preparing a carrying operation program for making a robot with a hand attached thereto perform a workpiece carrying operation, the workpiece carrying operation including at least one of a mounting motion and a demounting motion for a workpiece relative to a workpiece retainer. Thus, the robot programming device 10 includes a workpiece-feature obtaining section 14 for obtaining workpiece feature information 12 representing a geometrical feature of a workpiece from the three-dimensional shape data of the workpiece; a retainer-position obtaining section 18 for obtaining relative position information 16 between a workpiece and a workpiece retainer at an instant when the workpiece is mounted to the workpiece retainer; a hand-position obtaining section 22 for obtaining relative position information 20 between a workpiece and a hand at an instant when the hand holds the workpiece; a storing section 24 for storing the workpiece feature information 12 obtained by the workpiece-feature obtaining section 14, the relative position information 16 between the workpiece and the workpiece retainer obtained by the retainer-position obtaining section 18 and the relative position information 20 between the workpiece and the hand obtained by the hand-position obtaining section 22, as a set of obtained data D defined by correlating these three types of information with each other, and also storing a plurality of sets of the obtained data D with regard to a plurality of types of workpieces; an obtained-data retrieving section 28 for retrieving optimal obtained data SD, from among the plurality of sets of obtained data D stored in the storing section 24, by using new-workpiece feature information 26 obtained from three-dimensional shape data of a new workpiece, the optimal obtained data SD including the workpiece feature information 12 having a highest degree of coincidence with the new-workpiece feature information 26; and a program generating section 32 for generating a carrying operation program 30 for the new workpiece by using the optimal obtained data SD retrieved by the obtained-data retrieving section 28.

In the robot programming device 10 having the above basic configuration, data of the position and orientation of the workpiece retained by the workpiece retainer (i.e., data in association with a clamping or chucking position on the workpiece) is obtained, as the relative position information 16 between the workpiece and the workpiece retainer at an instant when the workpiece is mounted to the workpiece retainer, by the retainer-position obtaining section 18, and is stored in the storing section 24. Also, data of the position and orientation of the robot hand holding the workpiece (i.e., data in association with a fingertip position on the workpiece) is obtained, as the relative position information 20 between the workpiece and the hand at an instant when the hand holds the workpiece, by the hand-position obtaining section 22, and is stored in the storing section 24. The storing section 24 stores both of the relative position information 16, 20 with regard to a single workpiece as a set of obtained data D, together with the workpiece feature information 12 representing the geometrical feature of the workpiece. Therefore, it is possible to store, as the obtained data D, the relative position and orientation data between a workpiece and a workpiece retainer as well as between a workpiece and a hand, obtained in a previously-performed workpiece carrying operation, in such a manner as to be correlated with the workpiece feature information 12 of the workpiece.

The workpiece feature information 12 can be obtained from three-dimensional shape data, such as drawing data (e.g., CAD data) and image data (e.g., CCD-captured data) of the workpiece subjected to the previous carrying operation, by using a variety of feature extraction methods. Also, the relative position information 16 between the workpiece and the workpiece retainer and the relative position information 20 between the workpiece and the hand can be obtained from a carrying operation program used for executing the previous workpiece carrying operation. Thus, by obtaining the workpiece feature information 12 and the relative position information 16, 20 with regard to a plurality of workpiece carrying operations performed at certain previous or prior times, the plurality of sets of obtained data D can be stored in the storing section 24. In this connection, the action defined by "obtaining" can be actually performed as, for example, the action of the respective obtaining sections 14, 18, 22 as to spontaneously acquire the information from a suitable storage medium, or the action of an operator as to input the information to the respective obtaining sections 14, 18, 22 as occasion demands. The specific procedure for obtaining the workpiece feature information 12 and the relative position information 16, 20 will be described later in detail.

When a new workpiece is additionally introduced, the new-workpiece feature information 26 obtained from the three-dimensional shape data (e.g., drawing data or image data) of the new workpiece (e.g., by a variety of feature extraction methods) is given to the obtained-data retrieving section 28 (by the action of the retrieving section 28 as to spontaneously acquire the information, or by the action of the operator as to input the information to the retrieving section 28). Then, based on the new-workpiece feature information 26, the obtained-data retrieving section 28 retrieves the optimal obtained data SD from among the plurality of sets of obtained data D stored in the storing section 24, with the workpiece feature information 12 used as a keyword. The optimal obtained data SD as retrieved includes the relative position information 16, 20 with regard to the previous workpiece having a highest degree of coincidence in shape or feature with the new workpiece (i.e., having a shape very similar to that of the new workpiece). Therefore, the carrying operation program 30 generated by the program generating section 32 is configured as to make the robot perform such a carrying operation for the new workpiece that the relative position and orientation relationships between the workpiece and the workpiece retainer, as well as between the workpiece and the hand, are identical to those in the carrying operation previously performed for the similar workpiece.

Thus, according to the robot programming device 10, when preparing the carrying operation program for a workpiece performed by the robot, it is possible to eliminate, by using the obtained data D with regard to the previous workpiece carrying operation stored in the storing section 24, the need of the comprehensive investigation of the position and orientation of the workpiece retained by the workpiece retainer and the position and orientation of the hand at an instant when the hand holds the workpiece, which has been conventionally performed by a skilled operator while taking into account the shape of the workpiece subjected to the operation and/or the contents of a series of operation steps with regard to the workpiece. Moreover, it is possible to easily acquire the position and orientation data involving the position and orientation of the workpiece retained by the workpiece retainer, or the position and orientation of the hand at an instant when the hand holds the workpiece, which is inconvenient to be determined based on only the shape data of the workpiece (i.e., which varies depending on the shapes of workpieces), from the obtained data D with the workpiece feature information 12 used as a keyword, without requiring an operator's skill. Therefore, when the new workpiece is additionally introduced into a manufacturing system using the robot, it is possible to easily and reliably prepare the carrying operation program 30 optimal for the new workpiece by a reduced number of steps, and as a result, it is possible for the highly automated manufacturing system using the robot to be flexibly adapted to a multi-product manufacturing.

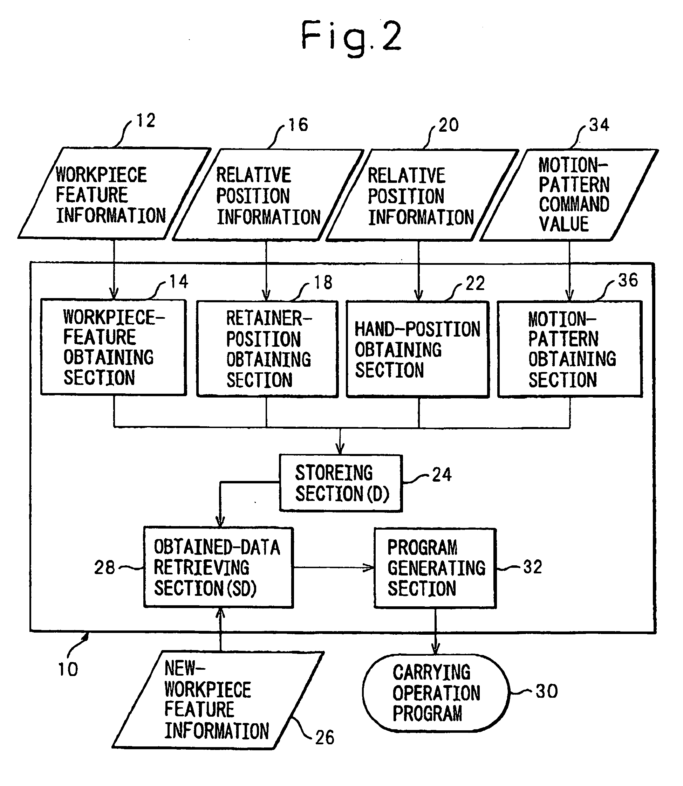

Fig. 2 shows, by a functional block diagram, a first development of the robot programming device 10 of Fig. 1. The robot programming device 10 of Fig. 2 further includes a motion-pattern obtaining section 36 for obtaining a motion-pattern command value 34 commanding at least one of a mounting motion and a demounting motion for the workpiece relative to the workpiece retainer. In this configuration, the storing section 24 stores the motion-pattern command value 34 obtained by the motion-pattern obtaining section 36 in a manner as to be correlated, as the set of obtained data D, with the workpiece feature information 12, the relative position information 16 between the workpiece and the workpiece retainer and the relative position information 20 between the workpiece and the hand.

In the robot programming device 10 shown in Fig. 2, data representing at least one of the mounting motion and the demounting motion for the workpiece, performed by the robot relative to the workpiece retainer, is obtained, as the motion-pattern command value 34 actually commanding the robot to perform such motion, by the motion-pattern obtaining section 36, and is stored in the storing section 24. The storing section 24 stores the motion-pattern command value 34 with regard to a single workpiece as the set of obtained data D, together with the workpiece feature information 12 and the relative position information 16, 20 described above. Therefore, it is possible to store, as the obtained data D, the data representing at least one of the mounting motion and the demounting motion for the workpiece relative to the workpiece retainer, obtained in a previously-performed workpiece carrying operation, in such a manner so as to be correlated with the workpiece feature information 12 of the workpiece.

The motion-pattern command value 34 can be obtained from a carrying operation program used for performing the previous workpiece carrying operation. Thus, by obtaining the motion-pattern command values 34 with regard respectively to a plurality of workpiece carrying operations performed at certain previous (or prior) times, the plurality of sets of obtained data D can be stored in the storing section 24. In this connection, the action defined by "obtaining" in the above configuration can also be actually performed as, for example, the action of the motion-pattern obtaining section 36 as to spontaneously acquiring the value from a suitable storage medium, or the action of an operator as to input the value to the motion-pattern obtaining section 36 as occasion demands. The specific procedure for obtaining the motion-pattern command value 34 will be described later in detail.

When a new workpiece is additionally introduced, the optimal obtained data SD retrieved by the obtained-data retrieving section 28 in a manner as described above includes the motion-pattern command value 34 with regard to the previous workpiece having a highest degree of coincidence in shape or feature with the new workpiece (i.e., having a shape very similar to that of the new workpiece). Therefore, the carrying operation program 30 generated by the program generating section 32 is configured as to make the robot perform such a carrying operation for the new workpiece that, in addition to the identity of the relative position and orientation relationships between the workpiece and the workpiece retainer as well as between the workpiece and the hand, at least one of the mounting motion and the demounting motion for the workpiece relative to the workpiece retainer is also identical to that in the carrying operation previously performed for the similar workpiece.

Thus, according to the robot programming device 10 shown in Fig. 2, when preparing the carrying operation program for a workpiece performed by the robot, it is possible to eliminate the need of the comprehensive investigation of the workpiece mounting or demounting motion of the robot relative to the workpiece retainer, together with the position and orientation of the workpiece retained by the workpiece retainer and the position and orientation of the hand holding the workpiece. Moreover, it is possible to easily acquire the motion data involving the workpiece mounting or demounting motion of the robot relative to the workpiece retainer, which varies depending on the shapes of workpieces, from the obtained data D with the workpiece feature information 12 used as a keyword, without requiring an operator's skill. Therefore, when the new workpiece is additionally introduced into a manufacturing system using the robot, it is possible to more easily and reliably prepare the carrying operation program 30 optimal for the new workpiece by a reduced number of steps.

It should be noted that, when the carrying operation program for a workpiece performed by the robot is prepared while taking into account the shape of the workpiece subjected to the operation and/or the contents of a series of operation steps with regard to the workpiece, at least one of the mounting and demounting motions of the robot for the workpiece relative to the workpiece retainer is typically an important item that should be investigated in detail together with the relative position and orientation relationships between the workpiece and the workpiece retainer and between the workpiece and the hand. However, in various manufacturing systems, the robot may sometimes be programmed, in the workpiece carrying operation, to perform a very simple motion, such that the robot always approaches the workpiece retainer from a position just above it and moves away from the workpiece retainer just upward. In this case, even when preparing the carrying operation program for a new workpiece, it is not necessary to newly designate at least one of the mounting and demounting motions for the workpiece relative to the workpiece retainer, and therefore, the motion-pattern obtaining section 36 can be omitted.

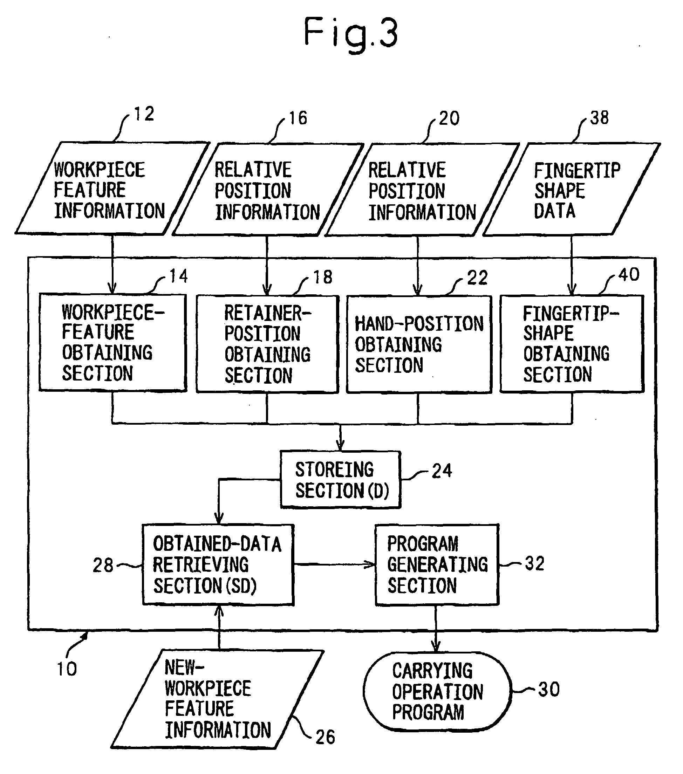

Fig. 3 shows, by a functional block diagram, a second development of the robot programming device 10 of Fig. 1. The robot programming device 10 of Fig. 3 further includes a fingertip-shape obtaining section 40 for obtaining three-dimensional shape data 38 of the fingertip of the hand. In this configuration, the storing section 24 stores the three-dimensional shape data 38 of the fingertip of the hand obtained by the fingertip-shape obtaining section 40 in a manner as to be correlate, as the set of obtained data D, with the workpiece feature information 12, the relative position information 16 between the workpiece and the workpiece retainer and the relative position information 20 between the workpiece and the hand.

In the robot programming device 10 shown in Fig. 3, data of the fingertip of the hand, the fingertip being required to have a shape conforming to the shape of the workpiece, is obtained, as the three-dimensional shape data 38 of the fingertip, by the fingertip-shape obtaining section 40, and is stored in the storing section 24. The storing section 24 stores the three-dimensional shape data 38 of the fingertip with regard to a single workpiece as the set of obtained data D, together with the workpiece feature information 12 and the relative position information 16, 20 described above. Therefore, it is possible to store, as the obtained data D, the shape data of the fingertip of the hand conforming to the shape of the workpiece, obtained in a previously-performed workpiece carrying operation, in such a manner as to be correlated with the workpiece feature information 12 of the workpiece.

The three-dimensional shape data 38 of the fingertip of the hand can be obtained, as drawing data (e.g., CAD data) or image data (e.g., CCD-captured data) of the fingertip, by the action of the fingertip-shape obtaining section 40 as to spontaneously acquire the data from an existing CAD system or vision system, or by the action of an operator as to input the data to the fingertip-shape obtaining section 40 as occasion demands. Thus, by obtaining the three-dimensional shape data 38 of the fingertip of the hand with regard respectively to a plurality of workpiece carrying operations performed at certain previous times, the plurality of sets of obtained data D can be stored in the storing section 24.

When a new workpiece is additionally introduced, the optimal obtained data SD retrieved by the obtained-data retrieving section 28 in a manner as described above includes the three-dimensional shape data 38 of the fingertip of the hand with regard to the previous workpiece having a highest degree of coincidence in shape or feature with the new workpiece (i.e., having a shape very similar to that of the new workpiece). Therefore, the carrying operation program 30 generated by the program generating section 32 is configured as to make the robot perform such a carrying operation for the new workpiece that, in addition to the identity of the relative position and orientation relationships between the workpiece and the workpiece retainer as well as between the workpiece and the hand, the shape of the fingertip of the hand that directly comes into contact with the workpiece is also identical to that in the carrying operation previously performed for the similar workpiece.

Thus, according to the robot programming device 10 shown in Fig. 3, when preparing the carrying operation program for a workpiece performed by the robot, it is possible to eliminate the need of the comprehensive investigation of the shape of the fingertip of the hand, which is required to coincide with that of the workpiece, together with the position and orientation of the workpiece retained by the workpiece retainer and the position and orientation of the hand holding the workpiece. Moreover, it is possible to easily acquire the data involving the shape of the fingertip of the hand, which varies depending on the shape of the workpiece, from the obtained data D with the workpiece feature information 12 used as a keyword, without requiring an operator's skill. Therefore, when the new workpiece is additionally introduced into the manufacturing system using the robot, it is possible to more easily and reliably prepare the carrying operation program 30 optimal for the new workpiece by a reduced number of steps. In this connection, when the carrying operation program 30 is executed, it is advisable to refer to the three-dimensional shape data 38 of the fingertip of the hand, included in the optimal obtained data SD, and thus to attach a hand having a corresponding finger to the robot.

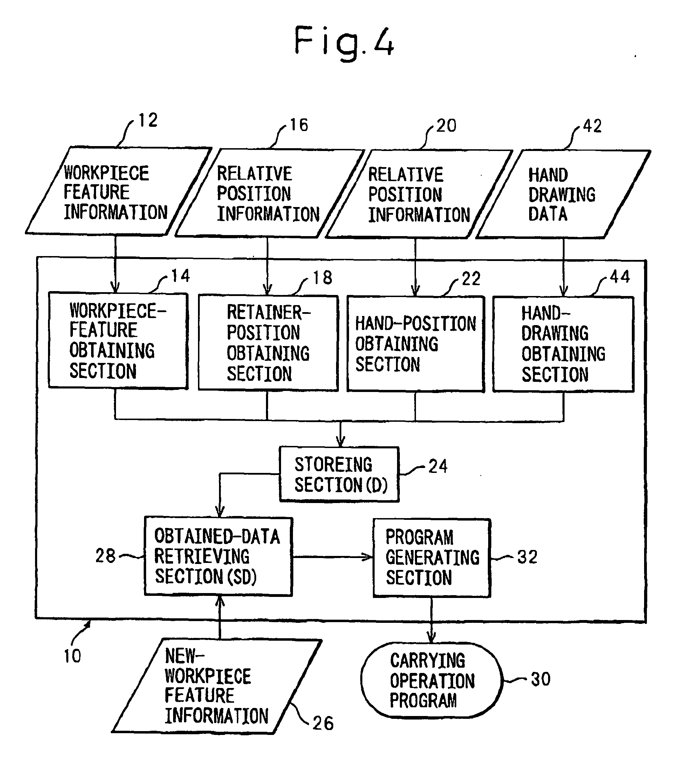

Fig. 4 shows, by a functional block diagram, a third development of the robot programming device 10 of Fig. 1. The robot programming device 10 of Fig. 4 further includes a hand-drawing obtaining section 44 for obtaining drawing data 42 of the hand. In this configuration, the storing section 24 stores the drawing data 42 of the hand obtained by the hand-drawing obtaining section 44 in a manner as to be correlated, as the set of obtained data D, with the workpiece feature information 12, the relative position information 16 between the workpiece and the workpiece retainer and the relative position information 20 between the workpiece and the hand.

In the robot programming device 10 shown in Fig. 4, data of the hand required to have a shape and structure (the structure means the number and arrangement of the fingers, etc.) conforming to the shape of the workpiece, is obtained, as the drawing data 42 of the hand, by the hand-drawing obtaining section 44, and is stored in the storing section 24. The storing section 24 stores the drawing data 42 of the hand with regard to a single workpiece as the set of obtained data D, together with the workpiece feature information 12 and the relative position information 16, 20 described above. Therefore, it is possible to store, as the obtained data D, the data of the hand conforming to the shape of the workpiece, obtained in a previously-performed workpiece carrying operation, in such a manner as to be correlated with the workpiece feature information 12 of the workpiece.

The drawing data 42 of the hand can be obtained by the action of the hand-drawing obtaining section 44 as to spontaneously acquire the data from a suitable storage medium, or by the action of an operator as to input the data to the hand-drawing obtaining section 44 as occasion demands. Thus, by obtaining the drawing data 42 of the hand with regard respectively to a plurality of workpiece carrying operations performed at certain previous times, the plurality of sets of obtained data D can be stored in the storing section 24.

When a new workpiece is additionally introduced, the optimal obtained data SD retrieved by the obtained-data retrieving section 28 in a manner as described above includes the drawing data 42 of the hand with regard to the previous workpiece having a highest degree of coincidence in shape or feature with the new workpiece (i.e., having a shape very similar to that of the new workpiece). Therefore, the carrying operation program 30 generated by the program generating section 32 is configured so as to make the robot perform such a carrying operation for the new workpiece that, in addition to the identity of the relative position and orientation relationships between the workpiece and the workpiece retainer as well as between the workpiece and the hand, the shape and structure of the hand holding the workpiece is also identical to that in the carrying operation previously performed for the similar workpiece.

Thus, according to the robot programming device 10 shown in Fig. 4, when preparing the carrying operation program for a workpiece performed by the robot, it is possible to eliminate the need of the comprehensive investigation of the shape and structure of the hand, which is required to coincide with the shape of the workpiece, together with the position and orientation of the workpiece retained by the workpiece retainer and the position and orientation of the hand holding the workpiece. Moreover, it is possible to easily acquire the data involving the shape and structure of the hand, which varies depending on the shape of the workpiece, from the obtained data D with the workpiece feature information 12 used as a keyword, without requiring an operator's skill. Therefore, when the new workpiece is additionally introduced into the manufacturing system using the robot, it is possible to more easily and reliably prepare the carrying operation program 30 optimal for the new workpiece by a reduced number of steps. In this connection, when the carrying operation program 30 is executed, it is advisable to refer to the drawing data 42 of the hand, included in the optimal obtained data SD, and thus to attach a corresponding hand to the robot.

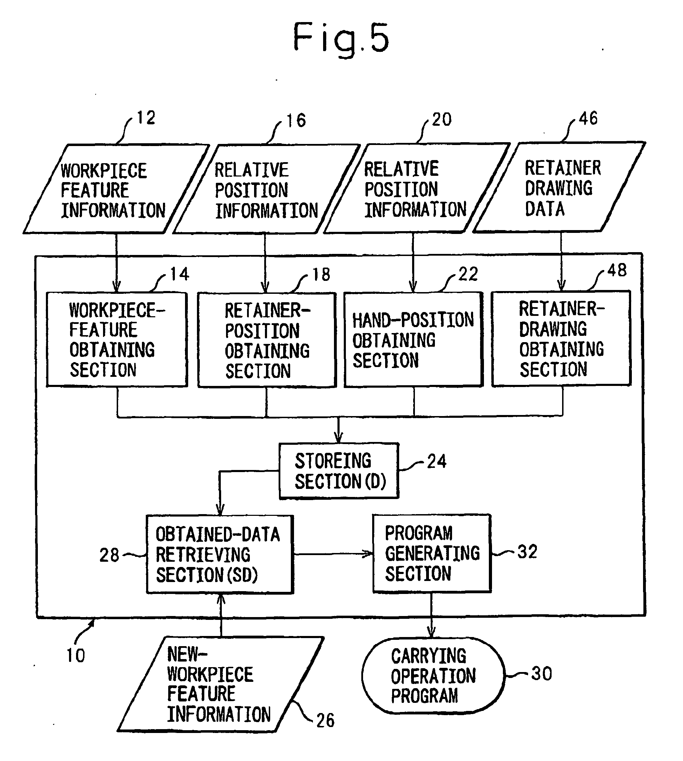

Fig. 5 shows, a functional block diagram, a fourth development of the robot programming device 10 of Fig. 1. The robot programming device 10 of Fig. 5 further includes a retainer-drawing obtaining section 48 for obtaining drawing data 46 of the workpiece retainer. In this configuration, the storing section 24 stores the drawing data 46 of the workpiece retainer obtained by the retainer-drawing obtaining section 48 in a manner as to be correlated, as the set of obtained data D, with the workpiece feature information 12, the relative position information 16 between the workpiece and the workpiece retainer and the relative position information 20 between the workpiece and the hand.

In the robot programming device 10 shown in Fig. 5, data of the workpiece retainer required to have a shape and structure (the structure means the number and arrangement of the abutment surfaces and clamps, etc.) conforming to the shape of the workpiece, is obtained, as the drawing data 46 of the workpiece retainer, by the retainer-drawing obtaining section 48, and is stored by the storing section 24. The storing section 24 stores the drawing data 46 of the workpiece retainer with regard to a single workpiece as the set of obtained data D, together with the workpiece feature information 12 and the relative position information 16, 20 described above. Therefore, it is possible to store, as the obtained data D, the data of the workpiece retainer conforming to the shape of the workpiece, obtained in a previously-performed workpiece carrying operation, in such a manner as to be correlated with the workpiece feature information 12 of the workpiece.

The drawing data 46 of the workpiece retainer can be obtained by the action of the retainer-drawing obtaining section 48 as to spontaneously acquire the data from a suitable storage medium, or by the action of an operator as to input the data to the retainer-drawing obtaining section 48 as occasion demands. Thus, by obtaining the drawing data 46 of the workpiece retainer with regard respectively to a plurality of workpiece carrying operations performed at certain previous times, the plurality of sets of obtained data D can be stored in the storing section 24.

When a new workpiece is additionally introduced, the optimal obtained data SD retrieved by the obtained-data retrieving section 28 in a manner as described above includes the drawing data 46 of the workpiece retainer with regard to the previous workpiece having a highest degree of coincidence in shape or feature with the new workpiece (i.e., having a shape very similar to that of the new workpiece). Therefore, the carrying operation program 30 generated by the program generating section 32 is configured as to make the robot perform such a carrying operation for the new workpiece that, in addition to the identity of the relative position and orientation relationships between the workpiece and the workpiece retainer as well as between the workpiece and the hand, the shape and structure of the workpiece retainer holding the workpiece is also identical to that in the carrying operation previously performed for the similar workpiece.

Thus, according to the robot programming device 10 shown in Fig. 5, when preparing the carrying operation program for a workpiece performed by the robot, it is possible to eliminate the need of the comprehensive investigation of the shape and structure of the workpiece retainer, which is required to coincide with the shape of the workpiece, together with the position and orientation of the workpiece retained by the workpiece retainer and the position and orientation of the hand holding the workpiece. Moreover, it is possible to easily acquire the data involving the shape and structure of the workpiece retainer, which varies depending on the shape of the workpiece, from the obtained data D with the workpiece feature information 12 used as a keyword, without requiring an operator's skill. Therefore, when the new workpiece is additionally introduced into the manufacturing system using the robot, it is possible to more easily and reliably prepare the carrying operation program 30 optimal for the new workpiece by a reduced number of steps. In this connection, when the carrying operation program 30 is executed, it is advisable to refer to the drawing data 46 of the workpiece retainer, included in the optimal obtained data SD, and thus to dispose a corresponding workpiece retainer in a working space of the robot.

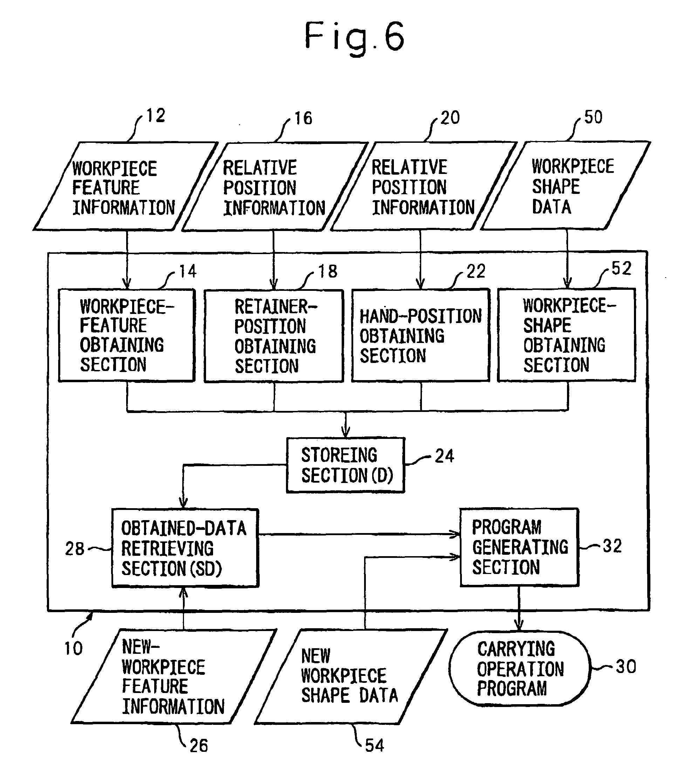

Fig. 6 shows, by a functional block diagram, a fifth development of the robot programming device 10 of Fig. 1. The robot programming device 10 of Fig. 6 further includes a workpiece-shape obtaining section 52 for obtaining three-dimensional shape data 50 of the workpiece. In this configuration, the storing section 24 stores the three-dimensional shape data 50 of the workpiece obtained by the workpiece-shape obtaining section 52 in a manner as to be correlated, as the set of obtained data D, with the workpiece feature information 12, the relative position information 16 between the workpiece and the workpiece retainer and the relative position information 20 between the workpiece and the hand. Then, the program generating section 32 corrects the relative position information 16 between the workpiece and the workpiece retainer and the relative position information 20 between the workpiece and the hand, both included in the optimal obtained data SD retrieved by the obtained-data retrieving section 28, based on a difference between the three-dimensional shape data 50 of the workpiece included in the optimal obtained data SD and three-dimensional shape data 54 of the new workpiece, and generates the carrying operation program 30 for the new workpiece by using these two corrected versions of relative position information 16, 20.

In the robot programming device 10 shown in Fig. 6, data of the shape of the workpiece is obtained, as the three-dimensional shape data 50 of the workpiece, by the workpiece-shape obtaining section 52, and is stored in the storing section 24. The storing section 24 stores the three-dimensional shape data 50 of the workpiece with regard to a single workpiece as the set of obtained data D, together with the workpiece feature information 12 and the relative position information 16, 20 described above. Therefore, it is possible to store, as the obtained data D, the shape data of the workpiece, obtained in a previously-performed workpiece carrying operation, in such a manner as to be correlated with the workpiece feature information 12 of the workpiece.

The three-dimensional shape data 50 of the workpiece can be obtained, as drawing data (e.g., CAD data) or image data (e.g., CCD-captured data) of the workpiece, by the action of the workpiece-shape obtaining section 52 as to spontaneously acquire the data from an existing CAD system or vision system, or by the action of an operator as to input the data to the workpiece-shape obtaining section 52 as occasion demands. The three-dimensional shape data 50 may be the same as data from which the workpiece feature information 12 obtained by the workpiece-feature obtaining section 14 is extracted. Thus, by obtaining the three-dimensional shape data 50 of the workpiece with regard respectively to a plurality of workpiece carrying operations performed at certain previous times, the plurality of sets of obtained data D can be stored in the storing section 24.

When a new workpiece is additionally introduced, the optimal obtained data SD retrieved by the obtained-data retrieving section 28 in a manner as described above includes the three-dimensional shape data 50 of the previous workpiece having a highest degree of coincidence in shape or feature with the new workpiece (i.e., having a shape very similar to that of the new workpiece). Therefore, the carrying operation program 30 generated by the program generating section 32, by using the corrected versions of relative position information 16, 20 respectively corrected based on the difference between the three-dimensional shape data 50 of the previous workpiece and the three-dimensional shape data 54 of the new workpiece, is configured as to make the robot perform a carrying operation modified so that the relative position and orientation relationships between the workpiece and the workpiece retainer as well as between the workpiece and the hand are highly accurately adapted to the new workpiece, compared to the carrying operation previously performed for the similar workpiece.

Thus, according to the robot programming device 10 shown in Fig. 6, when preparing the carrying operation program for a workpiece performed by the robot, it is possible to eliminate the need of the comprehensive investigation of the position and orientation of the workpiece retained by the workpiece retainer and the position and orientation of the hand at an instant when the hand holds the workpiece so as to be highly accurately adapted to the shape of the workpiece. In particular, in a case where the new workpiece has a shape geometrically similar to, or different only in height or length from, the workpiece involving the optimal obtained data SD retrieved by the obtained-data retrieving section 28, the difference between the three-dimensional shape data 50 of the previous workpiece and the three-dimensional shape data 54 of the new workpiece can be easily and accurately determined, and therefore, it is possible to prepare the carrying operation program 30 highly accurately adapted to the new workpiece, without requiring an operator's skill. Therefore, when the new workpiece is additionally introduced into the manufacturing system using the robot, it is possible to more easily and reliably prepare the carrying operation program 30 optimal for the new workpiece by a reduced number of steps.

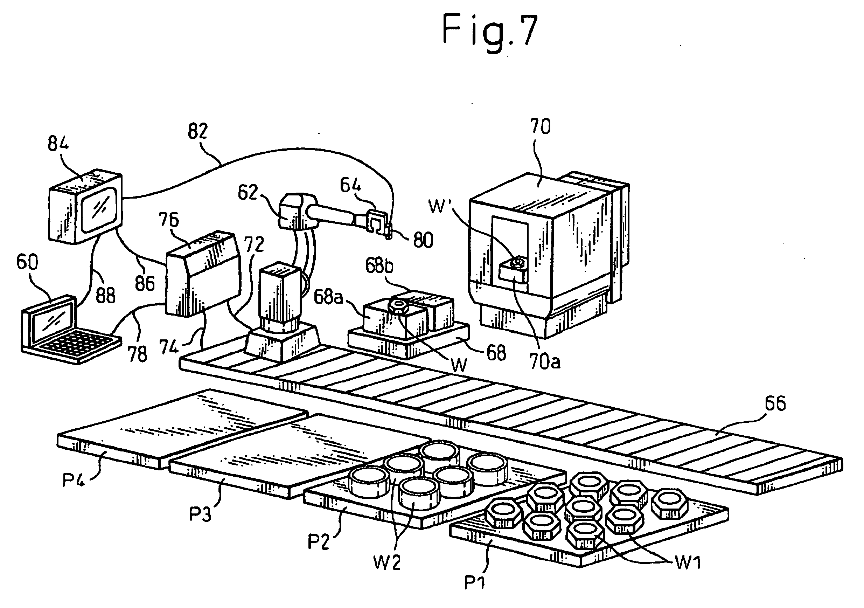

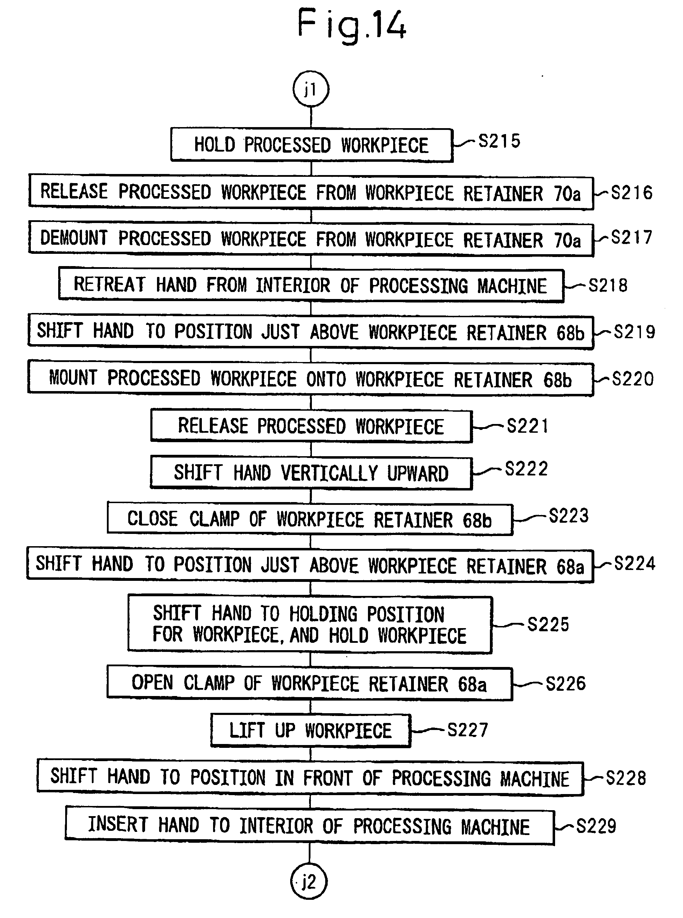

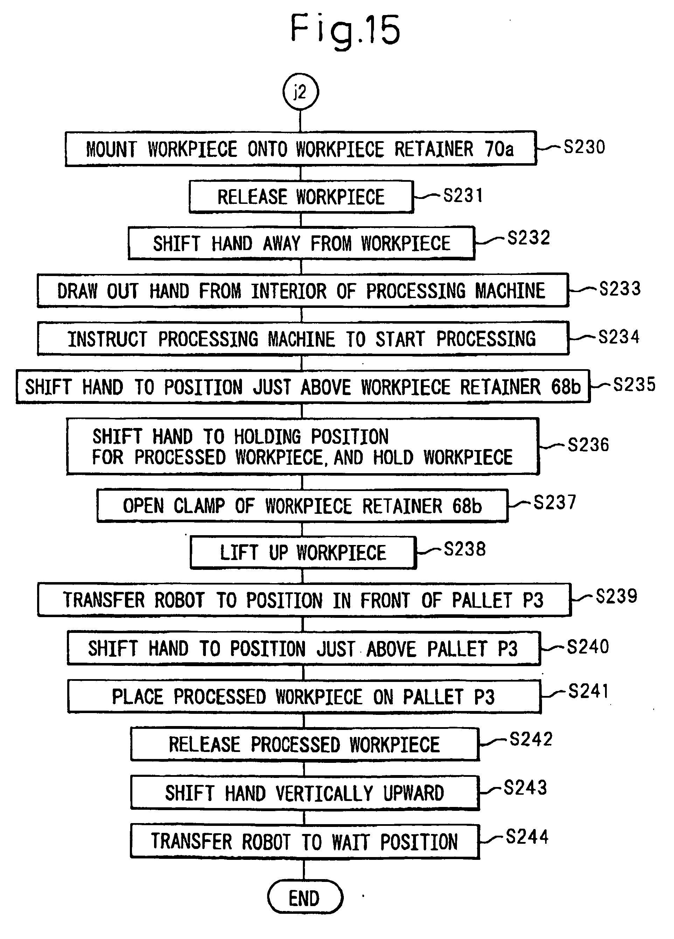

The configuration of a robot programming device, according to a preferred embodiment of the present invention, will be explained below with reference to Figs. 7 to 17, in association with an exemplary operation performed by a robot.

Fig. 7 is a schematic view showing entirely a manufacturing system using a robot, incorporating therein a robot programming device 60 according to an embodiment of the present invention. A hand 64 is attached to the wrist end of a robot (i.e., a robot mechanical section) 62. A plurality of workpieces W1 are placed on a pallet P1, and a plurality of workpieces W2, the type of which is different from the type of workpieces W1, are placed on a pallet P2. The robot 62 is installed on a conveyor (or a traveling axis) 66 to move along the conveyor 66, and operates to hold the workpiece W1 on the pallet P1 or the workpiece W2 on the pallet P2 by the hand 64, to carry or transport the workpiece to a provisional table 68, and to temporarily place the workpiece on the provisional table 68. A workpiece retainer 68a for positioning and retaining, at a predetermined position, the workpiece W1 carried from the pallet P1, and a workpiece retainer 68b for positioning and retaining, at a predetermined position, the workpiece W2 carried from the pallet P2, are installed on the provisional table 68. A processing machine 70 equipped with a workpiece retainer (e.g., a chuck) 70a is placed adjacent to the provisional table 68. The robot 62 carries the workpieces W1, W2 between the workpiece retainers 68a, 68b of the provisional table 68 and the workpiece retainer 70a of the processing machine 70 (i.e., a loading/unloading operation).

If the processing machine 70 is not operating, the robot 62 holds the workpiece W1 or workpiece W2 placed on the provisional table 68 by the hand 64 and feeds it to the processing machine 70. The processing machine 70 starts processing the workpiece, based on a process start command sent from the robot 62. At an instant the process is completed, the processing machine 70 transmits a process completion signal to the robot 62. The robot 62 receiving the process completion signal operates to take out the processed workpiece W1 or W2 from the processing machine 70, and to place the workpiece W1 on a pallet P3 but the workpiece W2 on a pallet P4.

The robot 62 and the conveyor 66 are connected to a control device 76 through communication cables 72, 74, respectively, and the control device 76 controls the operations of the robot 62 and the conveyor 66. The control device 76 is connected to an robot programming device 60 through a network cable 78. A camera 80 is attached to the wrist end of the robot 62 adjacently to the hand 64. The camera 80 is connected to an image processing device 84 through a camera cable 82. The image processing device 84 is connected to the control device 76 and the robot programming device 60 through network cables 86, 88, respectively. The workpiece retainers 68a, 68b installed on the provisional table 68 are connected to the control device 76 respectively through digital signal input/output cables (not shown).

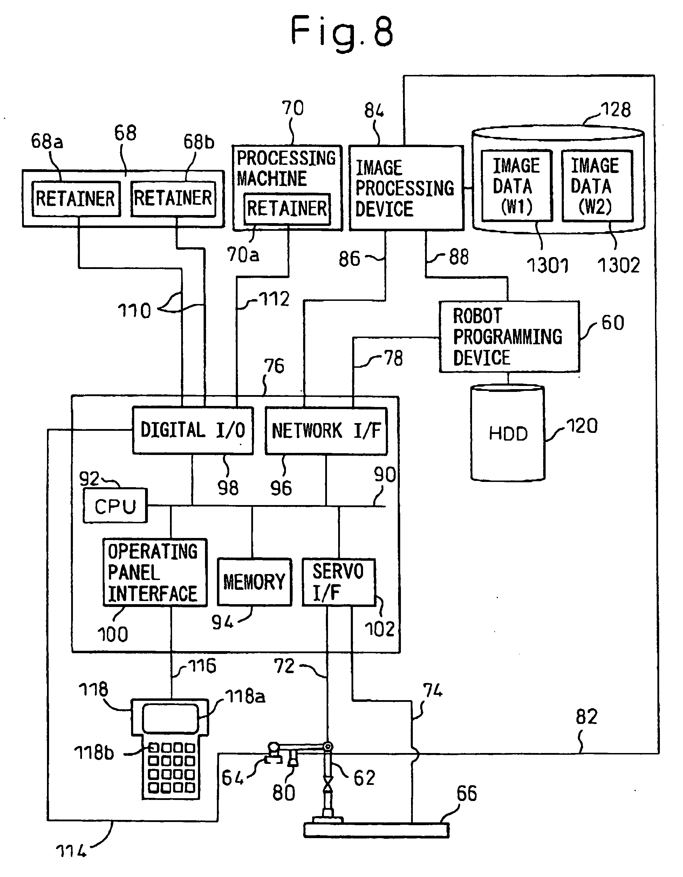

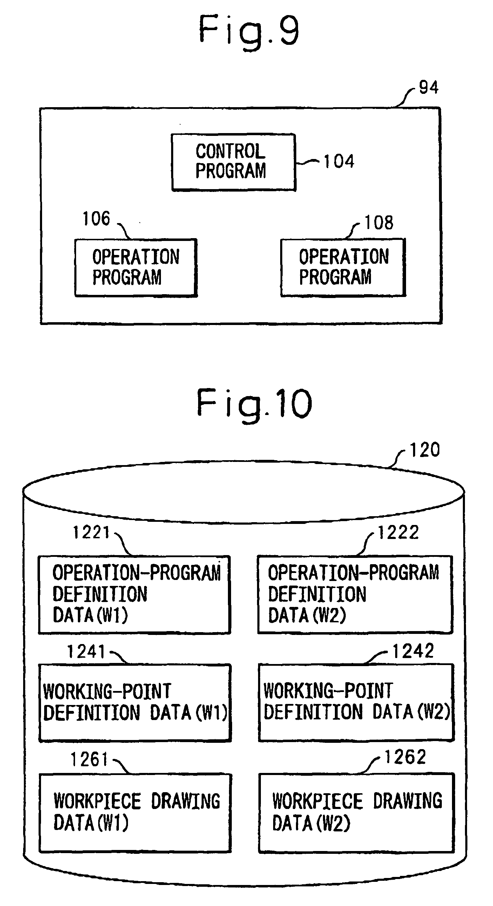

Fig. 8 is a block diagram showing mainly a configuration of a control system in the manufacturing system of Fig. 7. The control device 76 includes a central processing unit (CPU) 92, a memory 94, a network interface 96, a digital signal input/output circuit 98, an operating panel interface 100 and a servo interface 102, which are connected to each other through a bus 90. As shown in Fig. 9, the memory 94 stores a control program 104 adapted to be executed by the CPU 92 and to control the control device 76 in its entirety, and operation programs 106, 108 adapted to make the robot 62 operate. The operation program 106 is prepared to make the robot 62 perform a task concerning the workpiece W1 by using the hand 64, and the operation program 108 is prepared to make the robot 62 perform a task concerning the workpiece W2 by using the hand 64. Each of the operation programs 106, 108 is interpreted by using the control program 104, and is translated into the operations of the robot 62 and the hand 64. The operation programs 106, 108 are prepared by the robot programming device 60.

The network interface 96 is connected with the robot programming device 60 through the network cable 78, and also with the image processing device 84 through the network cable 86. The digital signal input/output circuit 98 is connected with the workpiece retainers 68a, 68b of the provisional table 68 individually through a digital signal input/output cable 110, with the processing machine 70 through a digital signal input/output cable 112, and with the hand 64 attached to the robot 62 through a digital signal input/output cable 114.

An operating panel or teach pendant 118 is connected to the operating panel interface 100 through an operating panel cable 116. The operating panel 118 includes a display 118a and an input button 118b. When an operator operates the operating panel 118, the robot 62 can be operated in a manual mode through the control device 76. Servo mechanisms, such as a servo motor of each of the control axes of the robot 62 and the conveyor 66, are connected to the servo interface 102 through the communication cables 72, 74.

A hard disk device or drive 120 is connected to the robot programming device 60. Alternatively, the robot programming device 60 may incorporate therein the hard disk device 120. As shown in Fig. 10, the hard disk device 120 stores, respectively concerning several types of workpieces W1, W2 to be processed, operation-program definition data 1221, 1222 generally expressing the operation of the robot 62, working-point definition data 1241, 1242 expressing concrete positions and orientations, and drawing data 1261, 1262 of the workpieces W1, W2.

A hard disk device or drive 128 is connected to the image processing device 84. Alternatively, the image processing device 84 may incorporate therein the hard disk device 128. The hard disk device 128 stores workpiece image data 1301, 1302 used as respective references for the detection of the workpieces W1, W2 to be operated. The workpiece image data 1301, 1302 are obtained by capturing the images of the workpieces W1, W2 with the camera 80 attached to the wrist end of the robot 62.

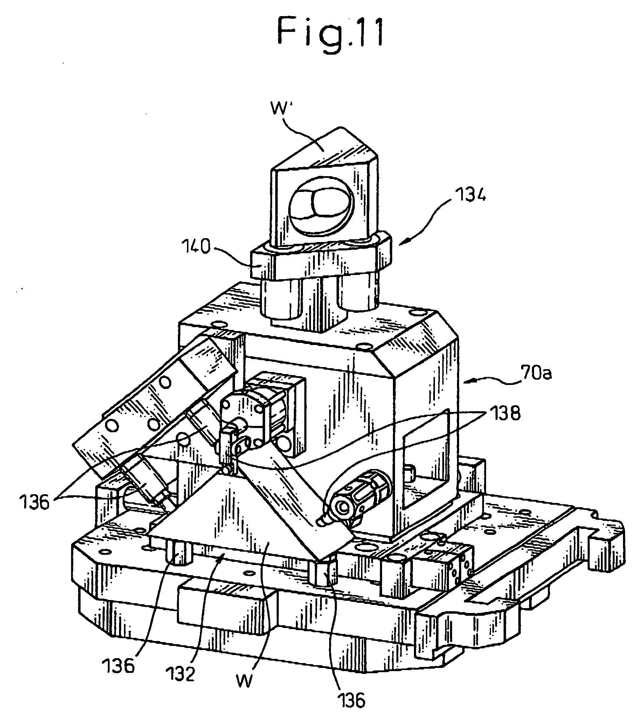

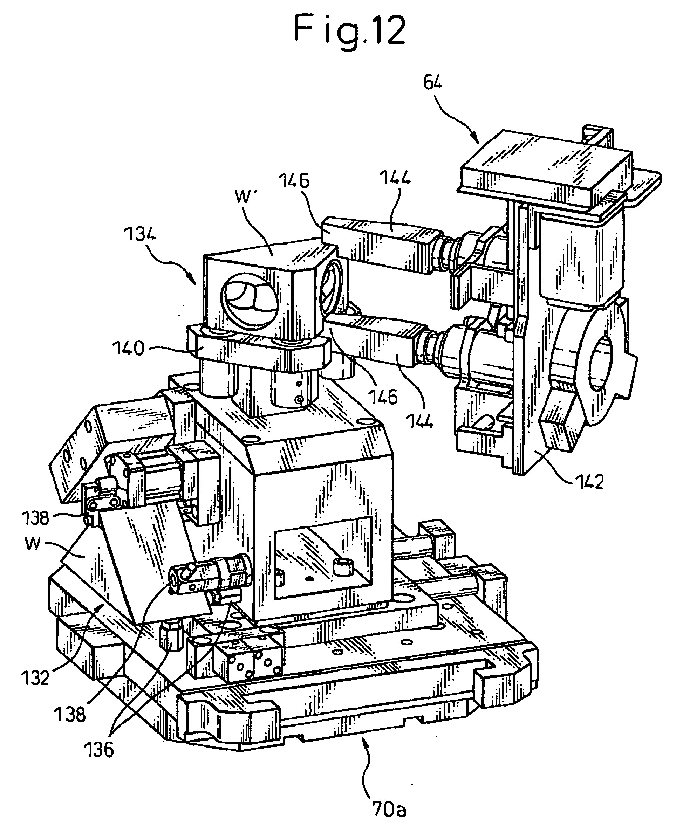

Fig. 11 shows an exemplary configuration of the workpiece retainer 70a of the processing machine 70, used in the above-described manufacturing system, together with a workpiece W to be operated. Also, Fig. 12 shows an exemplary configuration of the hand 64, used in the above-described manufacturing system, together with the workpiece retainer 70a and the workpiece W. It should be noted that the workpiece retainers 68a, 68b of the provisional table 68 may be configured similarly to the workpiece retainer 70a as illustrated.

The workpiece retainer 70a includes a first retaining section 132 capable of firmly and stably retaining a raw workpiece W before processing, and a second retaining section 134 capable of firmly and stably retaining a processed workpiece W' that has been subjected to a processing work. The first retaining section 132 includes a plurality of pillars 136 provided respectively at distal ends thereof with abutment surfaces adapted to be abutted to a surface of the raw workpiece W, and a plurality of clamp elements 138 adapted to press and secure the raw workpiece W on the abutment surfaces of the pillars 136. The abutment surfaces of the pillars 136 are abutted respectively onto a bottom surface, one inclined surface and one side surface of the raw workpiece W as seen in the drawing. The clamp elements 138 are engaged respectively with another inclined surface and another side surface, onto which the abutment surfaces of the pillars 136 are not abutted, so as to firmly and stably clamp the raw workpiece W while cooperating with the pillars 136. Also, the second retaining section 134 includes a base 140 having an abutment surface adapted to be abutted onto a surface of the processed workpiece W'. The processed workpiece W' can be firmly and stably secured to the base 140 by a plurality of bolts (not shown) acting as clamp elements. The pillars (or the abutment surfaces) 136, the clamp elements 138 and the base (or the abutment surface) 140 have shapes and structures (such as the number and arrangement) conforming to the shapes of respective workpieces W, W' to be operated.

On the other hand, the hand 64 includes a base 142 adapted to be attached to the wrist end of the robot 62 (Fig. 7), and two fingers 144 shiftably and removably mounted to the base 142. The fingers 144 are provided respectively at the distal ends thereof with fingertips 146 adapted to directly come into contact with the workpiece W, W' to be operated. Shapes and structures (the number and arrangement) of the fingers 144 and shapes of the fingertips 146 conform to the shapes of respective workpieces W, W' to be operated.

The robot 62 (Fig. 7) operates to mount the raw workpiece W held by the hand 64 onto the workpiece retainer 70a in such a manner as to bring the raw workpiece W simultaneously into contact with the pillars (or the abutment surfaces) 136 of the first retaining section 132, and also to take out, from the workpiece retainer 70a, the raw workpiece W placed on the first retaining section 132 with the hand 64 holding the raw workpiece W. Similarly, the robot 62 (Fig. 7) operates to mount the processed workpiece W' held by the hand 64 onto the workpiece retainer 70a in a manner as to bring the processed workpiece W' uniformly into contact with the base (or the abutment surface) 140 of the second retaining section 134, and also to take out, from the workpiece retainer 70a, the processed workpiece W' placed on the second retaining section 134 with the hand 64 holding the processed workpiece W'.

In the workpiece carrying operation performed by the robot 62 in the above-described manufacturing system (Fig. 7), the position and orientation of each workpiece W, W' retained by the workpiece retainer 70a, the position and orientation of the hand 64 at an instant when the hand 64 holds the workpieces W, W', and the workpiece mounting and demounting motion of the robot 62 relative to the workpiece retainer 70a, are optimized to meet the shape of each workpiece W, W' and/or a series of operation steps with regard to each workpiece W, W', as already described. The robot programming device 60 according to the embodiment of the present invention is configured to significantly reduce the workload of the operator required to prepare the carrying operation program optimized to meet the shape or operation steps of each workpiece W, W', as described in relation to the robot programming device 10 of Figs. 1 to 6.

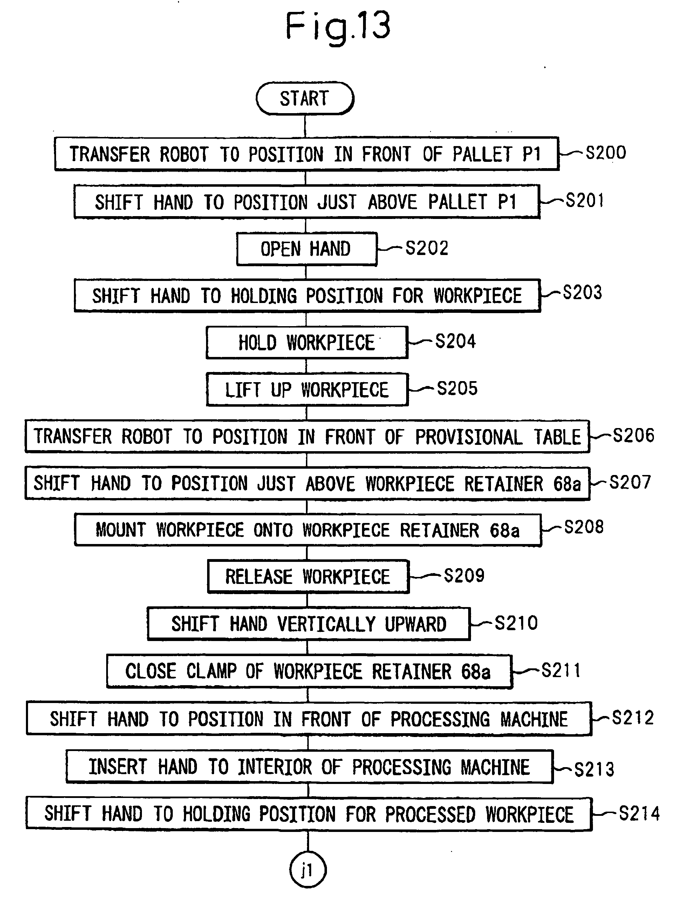

An example of the workpiece carrying operation performed by the robot 62 under the control of the control device 76, in the above-described manufacturing system (Fig. 7), will be described in detail with reference to flow charts of Figs. 13, 14 and 15. In the following exemplary operation, the robot 62 alternately executes, according to the operation program 106 stored in the memory 94, an operation for mounting the workpiece W1 (or the raw workpiece W) taken out from the pallet P1 onto the processing machine 70 through the provisional table 68, and an operation for placing the workpiece W1 (or the processed workpiece W') taken out from the processing machine 70 onto the pallet P3 through the provisional table 68.

First, the conveyor 66 is activated, and the robot 62 is transferred to a position in front of the pallet P1 (step S200). Next, the arm of the robot 62 is operated to turn, so as to shift the hand 64 (e.g., the hand 64 of Fig. 12) to a position just above the pallet P1 (step S201). Then, a digital signal indicating "open a hand" is output to the hand 64 through the digital signal input/output circuit 98, so as to open the hand 64 (step S202).

Next, the hand 64 is shifted toward a holding position at which a motion for holding the workpiece W1 (the raw workpiece W) is performed. For this motion, the hand 64 is first shifted to a position just above the holding position, and thereafter is shifted toward the holding position just below the former position at a low speed (step S203) . Then, a digital signal indicating "close a hand" is output to the hand 64 through the digital signal input/output circuit 98, and thereby closing the hand 64 to hold the workpiece W1 (step S204). Thereafter, the hand 64 is shifted upward to pick out the workpiece W1 from the pallet P1. For this motion, the hand 64 is first shifted at a low speed to a position just above the holding position, and thereafter is shifted at an increased, speed so as to further lift up the workpiece W1 (step S205).

Next, the arm of the robot 62 is operated to turn rightward and the conveyor 66 is simultaneously operated, and thereby the robot 62 is transferred to a position in front of the provisional table 68 (step S206) and, next, the hand 64 is shifted to a position above the workpiece retainer 68a (step S207). Thereafter, the hand 64 is shifted toward the retaining section (e.g., the first retaining section 132 of Fig. 11) of the workpiece retainer 68a at a low speed, so as to mount the workpiece W1 onto the workpiece retainer 68a (step S208). Then, a digital signal indicating "open a hand" is output to the hand 64 through the digital signal input/output circuit 98, and thereby opening the hand 64 to release the workpiece W1 (step S209).

Next, the hand 64 is shifted upward and is left away from the workpiece retainer 68a (step S210). Then, a digital signal indicating "close a clamp" is output to the workpiece retainer 68a through the digital signal input/output circuit 98, and thereby closing the clamp of the workpiece retainer 68a, and making the workpiece retainer 68a securely retain the workpiece W1 in a state where the workpiece W1 is accurately positioned at a predetermined position (step S211).

Thereafter, the arm of the robot 62 is operated to turn, so as to shift the hand 64 in the opened state to a position in front of the processing machine 70 (step S212) . Then, the hand 64 is inserted to an interior of the processing machine 70 through a door opening of the processing machine 70. For this motion, the arm of the robot 62 is operated to extend straightly for an insertion, so as to prevent the hand 64 from contacting or colliding with the processing machine 70 (step S213). Next, the hand 64 is shifted toward a holding position at which a motion for holding the workpiece W1 (or the processed workpiece W') secured on the workpiece retainer 70a (e.g., the workpiece 70a of Fig. 11) of the processing machine 70 (step S214). Then, the hand 64 is closed at the holding position to hold the workpiece W1 (step S215).

Next, a digital signal indicating "open a clamp" is output to the processing machine 70 through the digital signal input/output circuit 98, and thereby opening the clamp (or the chuck) of the workpiece retainer 70a to release the workpiece W1 (or the processed workpiece W') (step S216). Then, the hand 64 is shifted slightly from the holding position, so as to pick out the workpiece W1 from the workpiece retainer 70a of the processing machine 70 while avoiding interference (step S217). Thereafter, the hand 64 is drawn out from the processing machine 70 through the door opening. For this motion, the arm of the robot 62 is operated to extend straightly for a retreat, so as to prevent the hand 64 from contacting or colliding with the processing machine 70 (step S218).

Next, the hand 64 is shifted to a position above the workpiece retainer 68b of the provisional table 68 (step S219). Thereafter, the hand 64 is shifted toward the retaining section (e.g., the second retaining section 134 of Fig. 11) of the workpiece retainer 68b at a low speed, so as to mount the workpiece W1 (or the processed workpiece W') onto the workpiece retainer 68b (step S220). Then, the hand 64 is opened to release the workpiece W1 (step S221).

Next, the hand 64 is shifted upward and is left away from the workpiece retainer 68b (step S222). Then, the clamp of the workpiece retainer 68b is closed, and the workpiece retainer 68b is made securely hold the workpiece W1 in a state where the workpiece W1 is accurately positioned at a predetermined position (step S223). Thereafter, the hand 64 is shifted to a position just above the workpiece retainer 68a of the provisional table 68 (step S224).

Next, the hand 64 is shifted toward a holding position at which a motion for holding the workpiece W1 (or the raw workpiece W) retained by the workpiece retainer 68a is performed, and the hand 64 is closed at the holding position to hold the workpiece W1 (step S225). Then, the clamp of the workpiece retainer 68a is opened to release the workpiece W1 (step S226). Thereafter, the hand 64 is shifted upward to pick out the workpiece W1 from the workpiece retainer 68a. For this motion, the hand 64 is first shifted at a low speed to a position obliquely above the workpiece retainer 68a, and thereafter is shifted at an increased speed so as to further lift up the workpiece W1 (step S227).

Next, the arm of the robot 62 is operated to turn, so as to shift the hand 64 holding the workpiece W1 (or the raw workpiece W) to a position in front of the processing machine 70 (step S228). Then, the hand 64 is inserted to an interior of the processing machine 70 through the door opening of the processing machine 70. For this motion, the arm of the robot 62 is operated to extend straightly for an insertion, so as to prevent the hand 64 and the workpiece W1 from contacting or colliding with the processing machine 70 (step S229). Thereafter, the hand 64 is temporarily stopped at a position just in front of the retaining section (e.g., the first retaining section 132 of Fig. 11) of the workpiece retainer 70a of the processing machine 70, and then the workpiece W1 is attached to the workpiece retainer 70a at a low speed. In this state, the processing machine 70 is operated to close the clamp (or the chuck) of the workpiece retainer 70a to securely retain the workpiece W1 (step S230).

Next, the hand 64 is opened to release the workpiece W1 (step S231). Then, the hand 64 is shifted at a low speed to a position spaced at a slight distance from the workpiece retainer 70a while avoiding interference (step S232). Thereafter, the arm of the robot 62 is operated to extend straightly, so as to prevent the hand 64 from contacting with the processing machine 70, and to draw out the hand 64 through the door opening from the processing machine 70 (step S233). Then, a digital signal indicating "start a process for a workpiece W1" is output to the processing machine 70 through the digital signal input/output circuit 98 (step S234).

Next, the hand 64 is shifted to a position just above the workpiece retainer 68b of the provisional table 68 (step S235). Then, the hand 64 is shifted toward a holding position at which a motion for holding the workpiece W1 (or the processed workpiece W') retained by the workpiece retainer 68b is performed, and the hand 64 is closed at the holding position to hold the workpiece W1 (step S236). Then, the clamp of the workpiece retainer 68b is opened to release the workpiece W1 (step S237). Thereafter, the hand 64 is shifted upward to pick out the workpiece W1 from the workpiece retainer 68b.
For this motion, the hand 64 is first shifted at a low speed to a position obliquely above the workpiece retainer 68b, and thereafter is shifted at an increased speed so as to further lift up the workpiece W1 (step S238).

Next, the arm of the robot 62 is operated to turn rightward, and the conveyor 66 is activated to transfer the robot 62 to a position in front of the pallet P3 (step S239). Then, the hand 64 holding the workpiece W1 (or the processed workpiece W') is shifted to a position just above the pallet P3 (step S240). Thereafter, the hand 64 is shifted to a position just above a placing position on the pallet P3, at which the workpiece W1 is placed, and thereafter is shifted at a low speed toward the placing position just below the former position, so as to place the workpiece W1 on the pallet P3 (step S291) .

Next, the hand 64 is opened to release the workpiece W1 (step S242). Then, the hand 64 is shifted at a low speed to a position just above the placing position, and thereafter is shifted further upward at an increased speed (step S243). Last, the arm of the robot 62 is operated to turn toward the front of the robot, and the conveyor 66 is activated to transfer the robot 62 to an initial wait position (step S244). In this manner, the operation program 106 for the workpiece W1 (i.e., the raw workpiece W and the processed workpiece W') is completed.

Now, a robot programming method according to an embodiment of the present invention, which is executed by the robot programming device 60, for preparing the operation program 106 (108) controlling the above-described workpiece carrying operation in a general way, will be more concretely described below. In this connection, the robot programming device 60 is provided with a CPU (not shown) having the functions of the workpiece-feature obtaining section 14, the retainer-position obtaining section 18, the hand-position obtaining section 22, the obtained-data retrieving section 28, the program generating section 32, the motion-pattern obtaining section 36, the fingertip-shape obtaining section 40, the hand-drawing obtaining section 44, the retainer-drawing obtaining section 48 and the workpiece-shape obtaining section 52 in the robot programming device 10 shown in Figs. 1 to 6. Also, the hard disk device 120 constitutes the storing section 24 in the robot programming device 10 shown in Figs. 1 to 6.

The robot programming device 60 prepares the operation program 106 for the workpiece W1 using the operation-program definition data 1221 and the working-point definition data 1241 (both stored in the hard disk device 120), and prepares the operation program 108 for the workpiece W2 using the operation-program definition data 1222 and the working-point definition data 1242 (both stored in the hard disk device 120). As one concrete example, in the operation-program definition data 1221 stored in the hard disk device 120, the above-described operations of steps S212 to S218 are described as follows:
1: J P [1] 100% CONT 100
2 : WAIT %Machine.DoorOpen%=On
3: L %Machine.EnterPos% 1000mm/sec FINE
4: L %Work.ApproachPos% 500mm/sec FINE
5: L %Work.GripPos% 200mm/sec FINE
6: %Robot.Hand.Grip%=On
7: WAIT %Robot.Hand.GripDone%=On
8: %Machine.Fixture.Release%=On
9: WAIT %Machine.Fixture.ReleaseDone%=On
10: L %Work.RetrievePos% 200mm/sec FINE
11: L %Machine.ExitPos% 1000mm/sec FINE
12: P [1] {X=1688.40mm, Y=30.30mm, Z=1331.45mm,
W=64.62deg, P=-85.60deg, R=116.35deg};

In each line (line numbers are denoted at the tops of respective lines), a part interposed between a pair of %-s is a variable, and thus is an undefined data in the operation-program definition data. Among these variables, variables including "Work" are associated with the workpiece W1, variables including "Robot.Hand" are associated with the hand 64 of the robot 62, and variables including "Machine" and "Machine.Fixture" are associated respectively with the processing machine 70 and the workpiece retainer 70a. Variables representing positions and orientations in association with the workpiece W1 and the processing machine 70 are described by "ApproachPos", "GripPos", "RetrievePos", "EnterPos", and "ExitPos". Also, variables representing control signals for the hand 64 and the processing machine 70 (and the workpiece retainer 70a) are described by "Grip", "GripDone", "DoorOpen", "Release" and "ReleaseDone".

The meanings of the descriptions of the respective lines are as follows:

The first line shows definition data of step S212, and defines the operation for shifting the robot 62 to a position P [1] in front of the door of the processing machine 70.

The second and third lines show definition data of step S213, and define that the digital input signal %Machine.DoorOpen% transmitted to the digital signal input/output circuit 98 through the digital signal input/output cable 112 and indicating the open/close state of the door of the processing machine 70 is referenced, so that the robot 62 waits at the position in front of the door until this signal is tuned "On" indicating that the door is opened. Then, the robot is shifted to the position %Machine.EnterPos% for the insertion into the interior of the processing machine 70.

The fourth and fifth lines are definition data of step S214, and define that the hand 64 of the robot 62 is shifted to the position %Work.ApproachPos% slightly before the holding position of the workpiece W1 (or the processed workpiece 'W'), and thereafter to the holding position %Work.GripPos%.

The sixth and seventh lines are definition data of step S215, and define that the digital output signal %Robot.Hand.Grip% indicating the command to close the hand 64 of the robot 62 is turned "On", and the "On" signal is sent to the robot 62 through the digital signal input/output circuit 98 and the digital signal input/output cable 114, so as to close the hand 64. Further, it is detected whether the hand 64 is properly closed, by using a proximity sensor or a contact switch provided to the hand 64, and the digital input signal %Robot.Hand.GripDone% indicating a state of the sensor or switch is referenced, so as to confirm that the hand 64 is properly closed to hold the workpiece W1.

The eighth and ninth lines are definition data of step S216, and define that the digital output signal %Machine.Fixture.Release% indicating the command to open the clamp (or the chuck) of the workpiece retainer 70a of the processing machine 70 is turned "On", and the "On" signal is sent to the processing machine 70, so as to open the workpiece retainer 70a. Further, it is detected whether the workpiece retainer 70a is properly opened, by using a proximity sensor or a contact switch provided to the workpiece retainer 70a, and the digital input signal %Machine.Fixture.ReleaseDone% indicating a state of the sensor or switch is referenced, so as to confirm that the workpiece retainer 70a is properly opened to release the workpiece W1.

The tenth line is definition data of step S217, and defines that the hand 64 is shifted to the position %Work.RetrievePos% slightly spaced from the holding position for the workpiece W1, so as to demount the workpiece W1 from the workpiece retainer 70a.

The eleventh line is definition data of step S218, and defines that the hand 64 is shifted to the position %Machine.ExitPos% for drawing out the hand 64 from the interior of the processing machine 70.

The twelfth line describes specific data of the P [1] in the first line. This data is always set to a constant value even if the type (or the shape) of the workpiece changes, and therefore, is previously described in the operation-program definition data 1221.

The working-point definition data 1241 describes data of position and orientation as well as a control signal, which should be assigned respectively to the above-described variables of the operation-program definition data 1221. It should be noted that the position and orientation data shows spatial points taught to the robot 62, and includes X, Y, Z-values representing a position and W (yaw), P (pitch), R (roll)-values representing an orientation, in a single, reference orthogonal coordinate system (e.g., a world coordinate system) in the manufacturing system. One example of the working-point definition data 1241 is shown below:
%Work.ApproachPos% {X=1241.51mm, Y=-17.91mm, Z=900.07mm, W=15.24deg, P=-90.40deg, R=130.08deg};
%Work.GripPos% {X=1341.51mm, Y=-17.91mm, Z=890.07mm, W=15.24deg, P=-90.40deg, R=130.08deg};
%Work.RetrievePos% {X=1241.51mm, Y=-17.91mm, Z=990.07mm, W=15.24deg, P=-90.40deg, R=130.08deg};
%Machine.EnterPos% {X=1679.51mm, Y=-17.91mm, Z=1200.05mm, W=29.18deg, P=-88.69deg, R=150.21deg};
%Machine.ExitPos% {X=1679.51mm, Y=-17.91mm, Z=1200.05mm, W=29.18deg, P=-88.69deg, R-150.21deg};
%Machine.DoorOpen%=SDI [1];
%Machine.Fixture.Release%=SDO [1] ;
%Machine.Fixture.ReleaseDone%=SDI [2];
%Robot.Hand.Grip%=RDO [1];
%Robot.Hand.GripDone%=RDI [1];

The robot programming device 60 determines the respective variables of the above-described operation-program definition data 1221 by using the working-point definition data 1241, so as to prepare the operation program 106 shown below for the workpiece W1:
1: J P [1] 100% CONT 100
2: WAIT SDI [1]=On
3: L P [2] 1000mm/sec FINE
4: L P [3] 500mm/sec FINE
5: L P [4] 200mm/sec FINE
6: RDO [1]=On
7: WAIT RDI [1]=On
8: SDO [1]=On
9: WAIT SDI [2]=On
10: L P [5] 200mm/sec FINE
11: L P [6] 1000mm/sec FINE
12: P [1] {X=1688.40mm, Y=30.30mm, Z=1331.45 mm, W=64.62deg, P=-85.60deg, R=116.35deg};
13: P [2] {X=1679.51mm, Y=-17.91mm, Z=1200.05mm, W=29.18deg, P=-88.69deg, R=150.21deg};
14: P [3] {X=1241.51mm, Y=-17.91mm, Z=900.07mm, W=15.24deg, P=-90.40deg, R=130.08deg};
15: P [4] {X=1341.51mm, Y=-17.91mm, Z=890.07mm, W=15.24deg, P=-90.40deg, R=130.08deg};
16: P [5] {X=1241.51mm, Y=-17.91mm, Z=990.07mm, W=15.24deg, P=-90.40deg, R=130.08deg};
17: P [6] {X-1679.51mm, Y=-17.91mm, Z=1200.05mm, W=29.18deg, P=-88.69deg, R=150.21deg};

In the robot programming device 60, the working-point definition data 1241 is prepared in a way as described below.

The %Machine.DoorOpen%, %Machine.Fixture.Release%, %Machine.Fixture.ReleaseDone%, %Robot.Hand. Grip%, and %Robot.Hand.GripDone% (each describing a state of a control signal) defined in the above-described working-point definition data 1241 have signal numbers determined depending on the style of connection of the digital signal input/output circuit 98 of the control device 76 with the signal cable 112 for the processing machine 70 and the signal cable 114 for the hand 64 of the robot 62, and therefore, are set when the manufacturing system including the robot 62 is built. Also, %Machine.EnterPos% and %Machine.ExitPos% (describing position and orientation at which the workpiece W1 is put into or drawn out of the processing machine 70) defined in the working-point definition data 1241 are set by determining a mutual positional relationship between the robot 62 and the processing machine 70 when the manufacturing system is built.

Therefore, in the working-point definition data 1241, the operation of the hand 64 so as to carry the workpiece W1 is defined by the data assigned to the three variables %Work. ApproachPos%, %Work.GripPos% and %Work.RetrievePos%. Based on a holding position as a reference, at which the hand 64 holds the workpiece W1, the above three variables can respectively be expressed by the data of relative positions relative to the reference position (or the holding position). The holding position as the reference position (i.e., an absolute position in the coordinate system) is expressed by the variable %work.GripPos%, and therefore, the above three variables can be expressed as follows: %Work.ApproachPos%=%Work.GripPos%+%Work.GripPath.Node1% %Work.GripPos%=%Work.GripPos%+%Work.GripPath.Node2% %Work.RetrievePos%=%Work.GripPos%+%Work.GripPath.Node3%

In this connection, %Work.GripPath.Node1%, %Work. GripPath. Node2% and %Work.GripPath.Node3% are variables for expressing the operation of the robot 62 as to carry the workpiece W1 by the hand 64, by using the data of relative position and orientation, based on the holding position as a reference (or the absolute position), and thus each being referred to as an "operation pattern" in the present application (generally referred to as %Work.GripPath%). Examples of the position and orientation data assigned to the above variables %Work.GripPos%, %Work.GripPath.Node1%, %Work.GripPath.Node2% and %Work.GripPath.Node3% are shown below:
%Work.GripPos% {X=1341.51mm, Y=-17.91mm, Z=890.07mm, W=15.24deg, P=-90.40deg, R=130.08deg};
%Work.GripPath.Node1% {X=-100.00mm, Y=0.00mm, Z=10.00mm, W=0.00deg, P=0.00deg, R=0.00deg};
%Work.GripPath.Node2% {X=0.00mm, Y=0.00mm, Z=0.00mm, W=0.00deg, P=0.00deg, R=0.00deg};
%Work.GripPath.Node3% {X=-100.00mm, Y=0.00mm, Z=100.00mm, W=0.00deg, P=0.00deg, R=0.00deg};

The operation pattern %Work.GripPath% describing the above data defines such an operation of the robot 62 as to be shifted from the position %Work.ApproachPos% toward the holding position %Work.GripPos% by 100mm in the X-direction and -10mm in the Z-direction, then hold the workpiece W1 at the holding position %Work.GripPos%, and thereafter be shifted toward the position %Work.RetrievePos% by -100mm in the X-direction and 100mm in the Z-direction.

As described above, the operation of the robot 62 so as to hold and carry the workpiece W1 by the hand 64 can be defined by the operation pattern %Work.GripPath% of the robot 62 and the holding position (or the absolute position) %Work.GripPos% at which the hand 64 holds the workpiece W1. Further, based on a retaining position, as a reference, at which the workpiece W1 is retained by the workpiece retainer 70a of the processing machine 70, the holding position %Work.GripPos% can be expressed by using the data of a relative position relative to the reference position (or the retaining position), as follows:
%Work.GripPos%=%Work.BasePos%+%Work.GripOffset%

In this connection, %Work.BasePos% is a variable for expressing the retaining position at which the workpiece W1 is retained on the workpiece retainer 70a (or an absolute position in the coordinate system), by using the data of position and orientation, and %work.GripOffset% is a variable for expressing the holding position at which the hand 64 holds the workpiece W1, by using the data of a relative position and orientation based on the retaining position as a reference. Examples of values assigned to these variables are shown below:
%Work.BasePos% {X=1241.51mm, Y=117.91mm, Z=390.07mm, W=0.00deg, P=0.00deg, R=0.00deg};
%Work.GripOffset% {X=100.00mm, Y=100.00mm, Z=500.00mm, W=15.24deg, P=-90.40deg, R=130.08deg};

Further, based on an installing position as a reference, at which the workpiece retainer 70a is installed in the processing machine 70, the retaining position of the workpiece W1 %Work.BasePos% can be expressed by the data of a relative position relative to the reference position (or the installing position), as follows:
%Work.BasePos%=%Machine.Fixture.BasePos%+%Work.FixOffset%

In this connection, %Machine.Fixture.BasePos% is a variable for expressing the installing position of the workpiece retainer 70a in the processing machine 70 (or an absolute position in the coordinate system), by using the data of position and orientation, and %Work.FixOffset% is a variable for expressing the retaining position of the workpiece W1 on the workpiece retainer 70a, by using the data of a relative position and orientation based on the installing position as a reference. Among these variables, %Machine.Fixture.BasePos% is determined by installing the workpiece retainer 70a in the interior of the processing machine 70 and set when the manufacturing system is built. Examples of values assigned to these variables are shown below:
%Machine.Fixture.BasePos% {X-1241.00mm, Y=-117.00mm, Z=240.00mm, W=0.00deg, P=0.00deg, R=0.00deg}
%Work.FixOffset% {X=0.51mm, Y=-0.91mm, Z=150.07mm, W=0.00deg, P=0.00deg, R-0.00deg};

As described above, the operation of the robot 62 so as to hold and carry the workpiece W1 by the hand 64 is finally defined by the operation pattern %Work.GripPath% of the robot 62, the holding position (the relative position) %Work.GripOffset% at which the hand 64 holds the workpiece W1, the retaining position (the relative position) %Work.FixOffset% at which the workpiece retainer 70a retains the workpiece W1, and the other known data (the absolute position and the control signals) set by the mutual positonal relationship between the processing machine 70 and the workpiece retainer 70a. Therefore, when a new workpiece is to be introduced, in order to determine the operation of the robot 62 as to carry the new workpiece, it is required to specify only the three variables %Work.GripPath%, %Work.GripOffset% and %Work.FixOffset%.

In the robot programming device 60, the operation pattern %Work.GripPath% of the robot 62, the relative position %Work.GripOffset% between the hand 64 and the workpiece W1, and the relative position %Work.FixOffset% between the workpiece retainer 70a and the workpiece W1 can be obtained by, for example, a way as described below.

It is first assumed that the robot programming device 60 has a function to prepare three-dimensional shape data, such as 3D-CAD. In this case, three-dimensional shape (or drawing) data of the workpieces W1, W2, the hand 64 of the robot 62, the fingers 144 of the hand 64 (Fig. 12), the workpiece retainers 68a, 68b of the provisional table 68, the workpiece retainer 70a of the processing machine 70, and so on, can be prepared by the robot programming device 60 and stored in the hard disk device 120. Further, the robot programming device 60 can prepare the workpiece drawing data 1261, 1262 in the hard disk drive 120 by a function for assembling a plurality of three-dimensional shape data with each other and suitably disposing them in a single three-dimensional virtual space. The workpiece drawing data 1261, 1262 may be shown as, for example, the drawing of Fig. 12, and may include the shape data of the fingertip 146 of the hand 64, the design drawing data of the hand 64, the design drawing data of the workpiece retainer 70a of the processing machine 70, and the shape data of the workpieces w1, w2.

In, for example, a virtual space shown in Fig. 12, an operator disposes the workpiece W1 at a position where the workpiece W1 is securely mounted on the workpiece retainer 70a, disposes the fingers 144 of the hand 64 at positions where the fingers 144 are attached to the hand 64, and disposes the hand 64 and the fingers 144 at positions where the hand 64 and the fingers 144 hold the workpiece W1. In this operation, the hand 64 and the fingers 144 are disposed at several different positions (i.e., taught points), such as positions before the hand 64 and the fingers 144 hold the workpiece W1, positions at an instant when the hand 64 and the fingers 144 hold the workpiece w1, positions after the hand 64 and the fingers 144 hold the workpiece W1 and are shifted away from the workpiece retainer 70a, and so on. As a result, the operation pattern of the robot 62 as to hold and carry the workpiece W1 is designated. In this connection, in the workpiece drawing data 1261 shown in Fig. 12, the shape data of the workpieces W, W' in two different processing steps, i.e., the unprocessed raw workpiece W and the processed (or semi-finished) workpiece W' for which a process in a first step is finished but a process in a second step is not performed yet, is input and displayed.

The operator disposes the three-dimensional shape data of the hand 64, fingers 144, fingertips 146, workpiece retainer 70a and workpiece W1 in, for example, the virtual space shown in Fig. 12, in such a manner as to correspond to an actual manufacturing system, and thereby inputs the relative position and orientation between the workpiece W1 and the workpiece retainer 70a. Also, the operator makes the fingers 144 of the hand 64 hold the workpiece W1 in the same virtual space, and thereby inputs the relative positions and orientations between the workpiece W1 and the fingers 144 and between the fingers 144 and the hand 64 (or the base 142). Further, the operator makes the fingers 144 of the hand 64 approach the workpiece W1, makes the fingers 144 hold the workpiece W1 and makes the hand 64 lift up the workpiece W1 in the same virtual space, and thereby input the operation pattern of the robot 62 by using the data of the relative positions and orientations between the workpiece W1 and the hand 64 at respective taught points.

In the exemplary configuration of Fig. 12, the fingers 144 of the hand 64 can be replaced or the number of the fingers 144 can be increased or reduced. In this case, the data of the relative position and orientation between the workpiece W1 and the hand 64 is expressed by the data of the relative position and orientation between the workpiece W1 and the fingers 144 and the data of the relative position and orientation between the fingers 144 and the hand 64 (or the base 142). The workpiece drawing data 1261 thus prepared includes the data of the relative position and orientation between the workpiece W1 and the workpiece retainer 70a, the data of the relative position and orientation between the workpiece W1 and the hand 64, the operation pattern of the robot 62, the three-dimensional shape (or drawing) data of the hand 64, the three-dimensional shape (or drawing) data of the fingertips 146 of the hand 64, and the three-dimensional shape (or drawing) data of the workpiece retainer 70a. The robot programming device 60 can individually obtain these data from the workpiece drawing data 1261 stored in the hard disk device 120.

For example, when the operation program 106 is prepared, the robot programming device 60 obtains, from the workpiece drawing data 1261, the data of the relative position and orientation between the workpiece W1 and the workpiece retainer 70a and assigns it to the above-described variable %Work. FixOffset%, obtains the data of the relative position and orientation between the workpiece W1 and the hand 64 and assigns it to the above-described variable %Work.GripOffset%, and obtains the data of the operation pattern of the robot 62 expressed by assembling a plurality of the data of the relative position and orientation between the workpiece W1 and the hand 64 and assigns it to the above-described variable %Work.GripPath%. As a result, the above-described unknown variables %Work.ApproachPos%, %Work.GripPos% and %Work.RetrievePos% in the working-point definition data 1241 are determined. Further, the robot programming device 60 assigns the values of the above-described known variables in the working-point definition data 1241 to the operation-program definition data 1221. In this manner, the operation program 106 is prepared.

As already described in association with the robot programming device 10 of Figs. 1 to 6, the robot programming device 60 stores the workpiece feature information obtained from the three-dimensional shape data of the existing workpiece W1, W2, and the operation-program definition data 1221, 1222, working-point definition data 1241, 1242 and the workpiece drawing data 1261, 1262, which are used for preparing the operation programs 106, 108, as a set of obtained data defined by correlating these information and data with each other, and also stores a plurality of sets of obtained data in the hard disk device 120. Then, when a new workpiece is introduced into the manufacturing system, the new-workpiece feature information obtained from the three-dimensional shape data of the new workpiece is used to retrieve the optimal obtained data with regard to the workpieces W1, W2 having a highest degree of coincidence in shape or feature with the new workpiece, from among the plurality of sets of obtained data, with the workpiece feature information 12 used as a keyword, and the optimal obtained data as retrieved is used to prepare the carrying operation program for the new workpiece.

As a technique for obtaining the workpiece feature information from the three-dimensional data of the workpieces W1, W2, a feature extraction technique by image processing as described below can be adopted. In this connection, the three-dimensional shape data of the workpieces W1, W2 is not limited to the workpiece drawing data 1261, 1262 obtained from the 3D-CAD drawings and the like, but it may be the workpiece image data 1301, 1302 obtained when the image processing device 84 processes the data captured by the camera 80.

In this feature extraction technique, first, the lines of contours of the workpieces W1, W2 are extracted from the workpiece drawing data 1261, 1262 or the workpiece image data 1301, 1302. In the case of the workpiece drawing data 1261, 1262, the lines of contours of the workpieces W1, W2 are clear, and thus can be easily extracted. On the other hand, in the case where the workpiece image data 1301, 1302 is used, certain areas in the images where brightness abruptly changes are extracted as the lines of contours. Next, from the information about the extracted lines of contours, vertices and segments serving as clues to determine the shapes of the workpieces W1, W2 are extracted. Next, from the information about the extracted vertices and segments, planes capable of being defined by those vertices and segments are extracted, and further, primitive solids (rectangular parallelepipeds, circular cylinders, cones, spheres and so on) capable of being defined by the extracted planes are extracted. Then, solid models of the workpieces W1, W2 are expressed as aggregates of the extracted primitive solids.

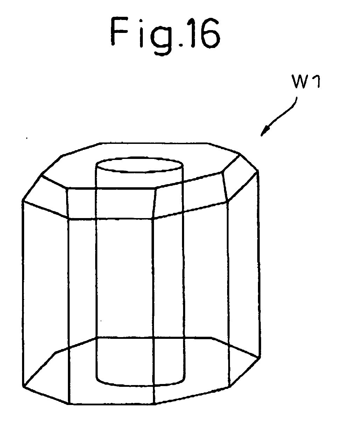

The solid models of the workpieces W1, W2 expressed by the aggregates of the primitive solids are referred to as, for example, CSG (Constructive Solid Geometry) models. The CSG model of the workpiece W1 as shown, by way of example, in Fig. 16 is formed by detecting two octagonal prisms and one circular cylinder from the workpiece drawing data 1261 or the workpiece image data 1301, and assembling these primitive solids with each other by adding and subtracting operations. The octagonal prism can be expressed in detail by parameters, such as center coordinates of an octagon defining the base surface of the prism, distances from the center coordinates to the respective corners of the prism, the extending direction of the prism, and the height of the prism. The circular cylinder can be expressed in detail by parameters, such as center coordinates of a circle defining the base surface of the cylinder, the radius of the circle, the extending direction of the cylinder, and the height of the cylinder. Therefore, it is advisable to extract these parameters from the workpiece drawing data 1261 or the workpiece image data 1301.

According to the feature extraction technique using the CSG model, regardless of the drawing directions of the workpieces W1, W2 in the original workpiece drawing data 1261, 1262 or the workpiece image data 1301, 1302, a degree of coincidence in the shape or feature can be determined with the primitive solids forming the workpieces W1, W2 (i.e., the workpiece feature information) used as keywords. Also, the degree of coincidence in the shape or feature can be determined even between geometrically similar workpieces.

In this connection, the robot programming device 10 (60) according to the present invention may be configured so that the workpiece-feature obtaining section 14 obtains, as the workpiece feature information 12, workpiece-shape transition information 12T (Fig. 1) representing a change in a shape of the workpiece in a time series fashion, and that the obtained-data retrieving section 28 retrieves the optimal obtained data SD by using, as the new-workpiece feature information 26, new workpiece-shape transition information 26T (Fig. 1) representing a change in a shape of the new workpiece in a time series fashion. According to this configuration, in a case where the carrying operation program 30, 106, 108 including a step or steps allowing the shape of the workpiece W1, W2 to change during the workpiece carrying operation is prepared, it is possible to significantly improve the retrieving accuracy of the optimal obtained data SD. In particular, if a processing work for the workpiece is performed at a certain period during the workpiece carrying operation, the workpiece-shape transition information 12T is configured to represent geometrical features in a plurality of different stages including stages before and after the workpiece is processed, and thereby it is possible to highly precisely retrieve the optimal obtained data SD with the workpiece-shape transition information 12T, accurately expressing the change in shape of a single workpiece by the processing, used as a keyword.

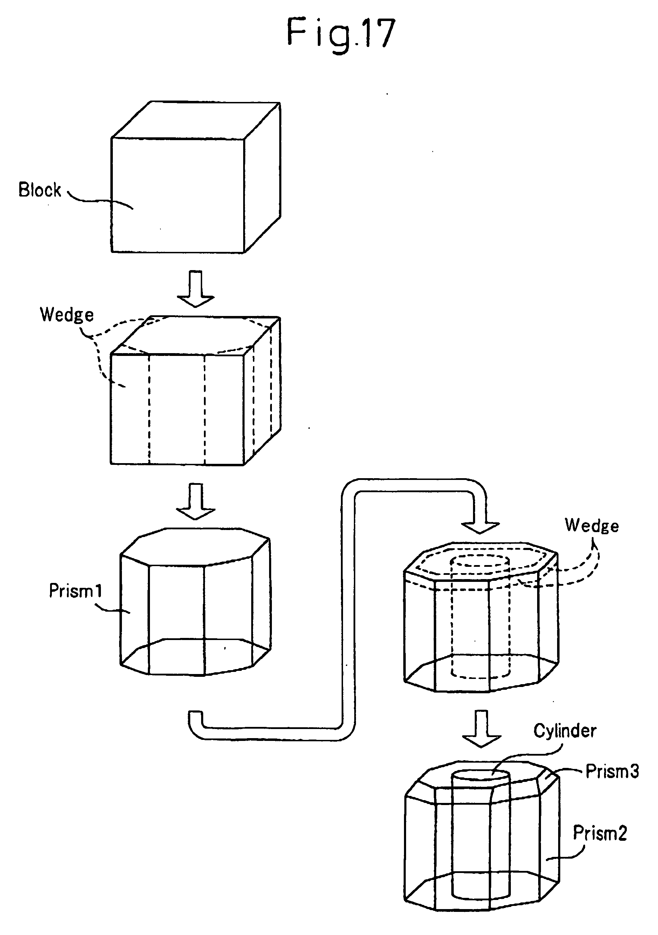

For example, as shown in Fig. 17, if a processing work in which a raw workpiece W is processed into a finished workpiece W" through first and second steps is performed at a certain period during the carrying operation for the workpiece W1, the three-dimensional shape data of the workpiece in three stages, i.e., the raw workpiece W before processing, the intermediate workpiece W' after completing the first step and the finished workpiece W" after completing the second step can be prepared, and the workpiece feature information can be extracted from the three-dimensional shape data in the respective stages by the above-described technique. In the illustrated example, as the CSG models of the workpiece W1, a rectangular parallelepiped (Block) expressing the raw workpiece W, and an octagonal prism (Prism1) expressing the intermediate workpiece W', and an assembly of primitive solids (Prism2+Prism3-Cylinder) expressing the finished workpiece W", are extracted from the corresponding three-dimensional shape data. Further, the contents of the first step (i.e., the transition from the raw workpiece W to the intermediate workpiece W') is expressed by a CSG model showing that the octagonal prism (Prism1) is obtained by subtracting four triangular prisms (Wedge) from the rectangular parallelepiped (Block). Similarly, the contents of the second step (i.e., the transition from the intermediate workpiece W' to the finished workpiece W") is expressed by a CSG model showing that the final shape (Prism2+Prism3-Cylinder) is obtained by subtracting eight triangular prisms (Wedge) and one circular cylinder (Cylinder) from the octagonal prism (Prism1) .

In this example, the robot programming device 10 (60) can store all of the CSG models (i.e., the workpiece-shape transition information 12T) expressing respectively the raw workpiece W, the intermediate workpiece W', the finished workpiece W", the first step and the second step as described above, in the storing section 24 (or the hard disk device 120), as the workpiece feature information 12 used as the keyword for the obtained data D. When a new workpiece is introduced, the robot programming device 10 (60) uses the new workpiece-shape transition information 26T extracted from the three-dimensional shape data of the new workpiece by a similar technique, so as to retrieve the optimal obtained data SD including the workpiece-shape transition information 12T having a highest coincidence with the new workpiece-shape transition information 26T. Then, the robot programming device 10 (60) uses the optimal obtained data SD read out from the storing section 24 (or the hard disk device 120), so as to prepare the hand 64, the fingers 144 of the hand 64, the workpiece retainers 68a, 68b of the provisional table 68, the workpiece retainer 70a of the processing machine 70, and the carrying operation program 30, for executing the carrying operation for the new workpiece. In this connection, when the optimal obtained data SD is retrieved, it may be advisable to designate, for retrieval, only the CSG models in a desired stage or only a part of the processing work, among the extracted CSG models at a plurality of stages.

A degree of coincidence between the workpiece feature information 12 (or the workpiece-shape transition information 12T) and the new-workpiece feature information 26 (or the new workpiece-shape transition information 26T) can be determined by, for example, ambiguous search based on fuzzy logic. In this search or retrieval technique, not only it is determined whether there is a coincidence of the type and number of the primitive solids forming the CSG model, but also a membership function for evaluating the degree of coincidence is prepared for each type of the primitive solid. For example, in a case where the degree of coincidence of the rectangular parallelepiped as the primitive solid is evaluated on a determination basis as to whether it is a thin plate or not, two faces having the largest area among six faces of the rectangular parallelepiped are defined as top and bottom faces, and a membership function is prepared, which assigns the degree of coincidence to a ratio between the area of the top or bottom face and a distance between the top and bottom faces (i.e., a height). Also, in a case where the degree of coincidence of the circular cylinder is evaluated on a determination basis as to whether it is a narrow hole or not, a membership function is prepared, which assigns the degree of coincidence to a ratio between a radius of a bottom face and a height of the circular cylinder. Thus, in a single CSG model, the degrees of coincidence for various determination bases are evaluated by using the respective particular membership functions, and the degrees of coincidence for these determination bases are combined to calculate a whole degree of coincidence. Then, the obtained data D including the workpiece feature information 12 (or the workpiece-shape transition information 12T) having the highest whole degree of coincidence with the new-workpiece feature information 26 (or the new workpiece-shape transition information 26T) is determined as the optimal obtained data SD.

Indeed, in the case where the type of the workpiece to be processed by the processing machine is changed in the manufacturing system, the new workpiece to be processed is often geometrically similar to the existing workpiece, and therefore, a robot hand, a finger of a hand, a workpiece retainer and a carrying operation program, which have been previously prepared, may sometimes be reused without changing the contents thereof. Under these circumstances, in the robot programming device 10 (60) according to the present invention, it is possible, as already described, to easily and reliably retrieve previous data optimal for the new workpiece, with the workpiece feature information 12 obtained from the three-dimensional shape data of the workpiece used as a keyword, without being affected by the skill of the operator.

Even if the previous data cannot be reused without changing the contents thereof, it is very useful to allow the actually used previous data to be referenced. For example, in particular, in a case where a new workpiece is geometrically similar to, or different only in height or length from, a workpiece for which a carrying operation program has been previously prepared, the difference between the three-dimensional shape data 50 of the previous workpiece and the three-dimensional shape data 54 of the new workpiece is be calculated, and based on this difference, the previous data can be corrected, as described with reference to Fig. 6. More specifically, the value of %Work.FixOffset% (or the data of relative position and orientation between the workpiece and the workpiece retainer) and the value of %Work.GripOffset% (or the data of relative position and orientation between the workpiece and the hand), which have been set at a time previously preparing the carrying operation program, are corrected based on the difference between the three-dimensional shape data 50 of the previous workpiece and the three-dimensional shape data 54 of the new workpiece. As a result, when the carrying operation program for the new workpiece is prepared, it is possible to eliminate the need to newly input %Work.FixOffset% and %Work.GripOffset%.

As apparent from the above description, according to the present invention, when the new workpiece is introduced into the existing manufacturing system, it is possible to effectively use various information about the robot hand, the finger of the hand, the workpiece retainer and the carrying operation program, corresponding to the existing workpiece, and thereby to easily and reliably prepare the carrying operation program optimal for the new workpiece by a reduced number of steps, without requiring an operator's skill. In particular, as the number of the obtained data with regard to the previous workpiece carrying operation is sufficiently increased, the carrying operation program suitable for the new workpiece can be prepared automatically only by making the robot view the new workpiece, and therefore, it is possible to eliminate the need to teach the carrying operation to the robot.

While preferred embodiments of the present invention have been explained above, it is also possible to define the present invention in the other categories according to the above-described embodiments, from a viewpoint that the robot programming device 10, 60 can be configured by a personal computer, as follows.

Thus, the present invention is a program for a robot programming, used for preparing a carrying operation program 30, 106, 108 for making a robot 62 with a hand 64 attached thereto perform a workpiece carrying operation including at least one of a mounting motion and a demounting motion for a workpiece W1, W2 relative to a workpiece retainer 68a, 68b, 70a, the program making a computer 10, 60 function as a workpiece-feature obtaining section 14 obtaining workpiece feature information 12 representing a geometrical feature of a workpiece W1, W2 from a three-dimensional shape data of the workpiece W1, W2; a retainer-position obtaining section 18 obtaining relative position information 16 between a workpiece W1, W2 and a workpiece retainer 68a, 68b, 70a at an instant when the workpiece W1, W2 is mounted to the workpiece retainer 68a, 68b, 70a; a hand-position obtaining section 22 obtaining relative position information 20 between a workpiece W1, W2 and a hand 64 at an instant when the hand 64 holds the workpiece W1, W2; a storing section 24 storing the workpiece feature information 12 obtained by the workpiece-feature obtaining section 14, the relative position information 16 between the workpiece and the workpiece retainer obtained by the retainer-position obtaining section 18 and the relative position information 20 between the workpiece and the hand obtained by the hand-position obtaining section 22, as a set of obtained data D defined by correlating these three types of information with each other, and also storing a plurality of sets of the obtained data D with regard to a plurality of types of workpieces W1, W2; an obtained-data retrieving section 28 retrieving optimal obtained data SD, from among the plurality of sets of obtained data D stored in the storing section 24, by using new-workpiece feature information 26 obtained from three-dimensional shape data of a new workpiece, the optimal obtained data including the workpiece feature information 12 having a highest degree of coincidence with the new-workpiece feature information 26; and a program generating section 32 generating a carrying operation program 30 for the new workpiece by using the optimal obtained data SD retrieved by the obtained-data retrieving section 28.

Also, the present invention is a computer readable recording medium, used for preparing a carrying operation program 30, 106, 108 for making a robot 62 with a hand 64 attached thereto perform a workpiece carrying operation including at least one of a mounting motion and a demounting motion for a workpiece W1, W2 relative to a workpiece retainer 68a, 68b, 70a, the recording medium recording a program for a robot programming and for making a computer 10, 60 function as a workpiece-feature obtaining section 14 obtaining workpiece feature information 12 representing a geometrical feature of a workpiece W1, W2 from a three-dimensional shape data of the workpiece W1, W2; a retainer-position obtaining section 18 obtaining relative position information 16 between a workpiece W1, W2 and a workpiece retainer 68a, 68b, 70a at an instant when the workpiece W1, W2 is mounted to the workpiece retainer 68a, 68b, 70a; a hand-position obtaining section 22 obtaining relative position information 20 between a workpiece W1, W2 and a hand 64 at an instant when the hand 64 holds the workpiece W1, W2; a storing section 24 storing the workpiece feature information 12 obtained by the workpiece-feature obtaining section 14, the relative position information 16 between the workpiece and the workpiece retainer obtained by the retainer-position obtaining section 18 and the relative position information 20 between the workpiece and the hand obtained by the hand-position obtaining section 22, as a set of obtained data D defined by correlating these three types of information with each other, and also storing a plurality of sets of the obtained data D with regard to a plurality of types of workpieces W1, W2; an obtained-data retrieving section 28 retrieving optimal obtained data SD, from among the plurality of sets of obtained data D stored in the storing section 24, by using new-workpiece feature information 26 obtained from three-dimensional shape data of a new workpiece, the optimal obtained data including the workpiece feature information 12 having a highest degree of coincidence with the new-workpiece feature information 26; and a program generating section 32 generating a carrying operation program 30 for the new workpiece by using the optimal obtained data SD retrieved by the obtained-data retrieving section 28.

Also, the present invention is a robot programming method for preparing, by using a computer 10, 60, a carrying operation program 30, 106, 108 for making a robot 62 with a hand 64 attached thereto perform a workpiece carrying operation, the workpiece carrying operation including at least one of a mounting motion and a demounting motion for a workpiece W1, W2 relative to a workpiece retainer 68a, 68b, 70a, the method comprising the step of obtaining, by a workpiece-feature obtaining section 14 of a computer 10, 60, workpiece feature information 12 representing a geometrical feature of a workpiece W1, W2 from a three-dimensional shape data of the workpiece W1, W2; the step of obtaining, by a retainer-position obtaining section 18 of a computer 10, 60, relative position information 16 between a workpiece W1, W2 and a workpiece retainer 68a, 68b, 70a at an instant when the workpiece W1, W2 is mounted to the workpiece retainer 68a, 68b, 70a; the step of obtaining, by a hand-position obtaining section 22 of a computer 10, 60, relative position information 20 between a workpiece W1, W2 and a hand at an instant when the hand holds the workpiece W1, W2; the step of storing, by a storing section 24 of a computer 10, 60, the workpiece feature information 12 obtained by the workpiece-feature obtaining section 14, the relative position information 16 between the workpiece and the workpiece retainer obtained by the retainer-position obtaining section 18 and the relative position information 20 between the workpiece and the hand obtained by the hand-position obtaining section 22, as a set of obtained data D defined by correlating these three types of information with each other, and also storing a plurality of sets of the obtained data D with regard to a plurality of types of workpieces W1, W2; the step of retrieving, by an obtained-data retrieving section 28 of a computer 10, 60, optimal obtained data SD, from among the plurality of sets of obtained data D stored in the storing section 24, by using new-workpiece feature information 26 obtained from three-dimensional shape data of a new workpiece, the optimal obtained data including the workpiece feature information 12 having a highest degree of coincidence with the new-workpiece feature information 26; and the step of generating, by a program generating section 32 of a computer 10, 60, a carrying operation program 30 for the new workpiece by using the optimal obtained data SD retrieved by the obtained-data retrieving section 28.

While the invention has been described with reference to specific preferred embodiments, it will be understood, by those skilled in the art, that various changes and modifications may be made thereto without departing from the scope of the following claims.

## Claims

1. A robot programming device for preparing a carrying operation program for making a robot with a hand attached thereto perform a workpiece carrying operation, the workpiece carrying operation including at least one of a mounting motion and a demounting motion for a workpiece relative to a workpiece retainer, comprising:
a workpiece-feature obtaining section (14) obtaining workpiece feature information (12) representing a geometrical feature of a workpiece from a three-dimensional shape data of the workpiece;
a retainer-position obtaining section (18) obtaining relative position information (16) between a workpiece and a workpiece retainer at an instant when the workpiece is mounted to the workpiece retainer; and
a hand-position obtaining section (22) obtaining relative position information (20) between a workpiece and a hand at an instant when the hand holds the workpiece;
the robot programming device **characterized by** further comprising a storing section (24) storing said workpiece feature information obtained by said workpiece-feature obtaining section, said relative position information between the workpiece and the workpiece retainer obtained by said retainer-position obtaining section and said relative position information between the workpiece and the hand obtained by said hand-position obtaining section, as a set of obtained data (D) defined by correlating these three types of information with each other, and also storing a plurality of sets of said obtained data with regard to a plurality of types of workpieces;
an obtained-data retrieving section (28) retrieving optimal obtained data (SD), from among said plurality of sets of obtained data stored in said storing section, by using new-workpiece feature information (26) obtained from three-dimensional shape data of a new workpiece, said optimal obtained data including said workpiece feature information having a highest degree of coincidence with said new-workpiece feature information; and
a program generating section (32) generating a carrying operation program (30) for the new workpiece by using said optimal obtained data retrieved by said obtained-data retrieving section.

2. A robot programming device as set forth in claim 1, further comprising a motion-pattern obtaining section (36) obtaining a motion-pattern command value (34) commanding at least one of a mounting motion and a demounting motion for the workpiece relative to the workpiece retainer; wherein said storing section stores said motion-pattern command value obtained by said motion-pattern obtaining section in a manner as to be correlated, as said set of obtained data, with said workpiece feature information, said relative position information between the workpiece and the workpiece retainer and said relative position information between the workpiece and the hand.

3. A robot programming device as set forth in claim 1, further comprising a fingertip-shape obtaining section (40) obtaining three-dimensional shape data (38) of a fingertip of the hand; wherein said storing section stores said three-dimensional shape data of the fingertip of the hand obtained by said fingertip-shape obtaining section in a manner as to be correlated, as said set of obtained data, with said workpiece feature information, said relative position information between the workpiece and the workpiece retainer and said relative position information between the workpiece and the hand.

4. A robot programming device as set forth in claim 1, further comprising a hand-drawing obtaining section (44) obtaining drawing data (42) of the hand; wherein said storing section stores said drawing data of the hand obtained by said hand-drawing obtaining section in a manner as to be correlated, as said set of obtained data, with said workpiece feature information, said relative position information between the workpiece and the workpiece retainer and said relative position information between the workpiece and the hand.

5. A robot programming device as set forth in claim 1, further comprising a retainer-drawing obtaining section (48) obtaining drawing data (46) of the workpiece retainer; wherein said storing section stores said drawing data of the workpiece retainer obtained by said retainer-drawing obtaining section in a manner as to be correlated, as said set of obtained data, with said workpiece feature information, said relative position information between the workpiece and the workpiece retainer and said relative position information between the workpiece and the hand.

6. A robot programming device as set forth in claim 1, further comprising a workpiece-shape obtaining section (52) obtaining three-dimensional shape data (50) of the workpiece; wherein said storing section stores said three-dimensional shape data of the workpiece obtained by said workpiece-shape obtaining section in a manner as to be correlated, as said set of obtained data, with said workpiece feature information, said relative position information between the workpiece and the workpiece retainer and said relative position information between the workpiece and the hand; and wherein said program generating section corrects said relative position information between the workpiece and the workpiece retainer and said relative position information between the workpiece and the hand, both included in said optimal obtained data retrieved by said obtained-data retrieving section, based on a difference between said three-dimensional shape data of the workpiece included in said optimal obtained data and three-dimensional shape data (54) of the new workpiece, and generates said carrying operation program for the new workpiece by using these two corrected versions of relative position information.

7. A robot programming device as set forth in claim 1, wherein said workpiece-feature obtaining section obtains, as said workpiece feature information, workpiece-shape transition information (12T) representing a change in a shape of the workpiece in a time series fashion; and wherein said obtained-data retrieving section retrieves said optimal obtained data by using, as said new-workpiece feature information, new workpiece-shape transition information (26T) representing a change in a shape of the new workpiece in a time series fashion.

8. A robot programming device as set forth in claim 7, adapted to prepare said carrying operation program in which a processing work for the workpiece is performed at a period during said workpiece carrying operation, wherein said workpiece-shape transition information represents geometrical features in a plurality of different stages including stages before and after the workpiece is processed.

9. A robot programming method for preparing, by using a computer, a carrying operation program for making a robot with a hand attached thereto perform a workpiece carrying operation, the workpiece carrying operation including at least one of a mounting motion and a demounting motion for a workpiece relative to a workpiece retainer, said method comprising:
obtaining, by a workpiece-feature obtaining section (14) of a computer, workpiece feature information (12) representing a geometrical feature of a workpiece from a three-dimensional shape data of the workpiece;
obtaining, by a retainer-position obtaining section (18) of a computer, relative position information (16) between a workpiece and a workpiece retainer at an instant when the workpiece is mounted to the workpiece retainer;
obtaining, by a hand-position obtaining section (22) of a computer, relative position information (20) between a workpiece and a hand at an instant when the hand holds the workpiece;
**characterized by** further comprising the steps of storing, by a storing section (24) of a computer, said workpiece feature information obtained by said workpiece-feature obtaining section, said relative position information between the workpiece and the workpiece retainer obtained by said retainer-position obtaining section and said relative position information between the workpiece and the hand obtained by said hand-position obtaining section, as a set of obtained data (D) defined by correlating these three types of information with each other, and also storing a plurality of sets of said obtained data with regard to a plurality of types of workpieces;
retrieving, by an obtained-data retrieving section (28) of a computer, optimal obtained data (SD), from among said plurality of sets of obtained data stored in said storing section, by using new-workpiece feature information (26) obtained from three-dimensional shape data of a new workpiece, said optimal obtained data including said workpiece feature information having a highest degree of coincidence with said new-workpiece feature information; and
generating, by a program generating section (32) of a computer, a carrying operation program (30) for the new workpiece by using said optimal obtained data retrieved by said obtained-data retrieving section.

10. A program for a robot programming, used for preparing a carrying operation program for making a robot with a hand attached thereto perform a workpiece carrying operation including at least one of a mounting motion and a demounting motion for a workpiece relative to a workpiece retainer, said program making a computer function configured to perform the method of claim 9.

11. A computer readable recording medium, used for preparing a carrying operation program for making a robot with a hand attached thereto perform a workpiece carrying operation including at least one of a mounting motion and a demounting motion for a workpiece relative to a workpiece retainer, said recording medium recording a program for a robot programming according to claim 10.

## Patentansprüche

1. Roboter-Programmiervorrichtung zum Erstellen eines Transportvorgangs-Programms, um einen Roboter mit einer daran angebrachten Hand zur Ausführung eines Werkstück-Transportvorgangs zu veranlassen, wobei der Werkstück-Transportvorgang eine Montagebewegung und/oder eine Demontagebewegung für ein Werkstück in Bezug auf einen Werkstückhalter beinhaltet, umfassend:
einen Werkstück-Merkmal-Erfassungsabschnitt (14), der Werkstück-Merkmalsinformation (12) erfasst, welche ein geometrisches Merkmal eines Werkstücks aus dreidimensionalen Formdaten des Werkstücks darstellt;
einen Halterposition-Erfassungsabschnitt (18), der Relativpositionsinformation (16) zwischen einem Werkstück und einem Werkstückhalter zu einem Zeitpunkt erfasst, zu dem das Werkstück am Werkstückhalter angebracht wird; und
einen Handposition-Erfassungsabschnitt (22), der Relativpositionsinformation (20) zwischen einem Werkstück und einer Hand zu einem Zeitpunkt erfasst, zu dem die Hand das Werkstück hält;
wobei die Roboter-Programmiervorrichtung **dadurch gekennzeichnet ist, dass** sie ferner umfasst:
einen Speicherabschnitt (24), der die von dem Werkstück-Merkmal-Erfassungsabschnitt erfasste Werkstück-Merkmalsinformation, die von dem Halterpositions-Erfassungsabschnitt erfasste Relativpositionsinformation zwischen dem Werkstück und dem Werkstückhalter sowie die von dem Handposition-Erfassungsabschnitt erfasste Relativpositionsinformation zwischen dem Werkstück und der Hand als einen Satz erfasster Daten (D), der durch Korrelieren dieser drei Informationstypen zueinander definiert ist, speichert, und auch mehrere Sätze der erfassten Daten bezüglich mehrerer Typen von Werkstücken speichert;
einen Abrufabschnitt (28) für erfasste Daten, der erfasste Optimaldaten (SD) aus den in dem Speicherabschnitt gespeicherten mehreren Sätzen erfasster Daten abruft, indem er aus Daten der dreidimensionalen Form eines neuen Werkstücks erfasste Merkmalsinformation (26) über das neue Werkstück verwendet, wobei die erfassten Optimaldaten die Werkstück-Merkmalsinformation, die einen höchsten Grad an Koinzidenz mit der Merkmalsinformation über das neue Werkstück aufweist, enthalten; und
einen Programm-Generierungsabschnitt (32), der ein Transportvorgangs-Programm (30) für das neue Werkstück unter Verwendung der erfassten Optimaldaten, die von dem Abrufabschnitt für erfasste Daten abgerufen wurden, generiert.

2. Roboter-Programmiervorrichtung nach Anspruch 1, ferner mit einem Bewegungsmuster-Erfassungsabschnitt (36), der einen Bewegungsmuster-Steuerwert (34) erfasst, welcher eine Montagebewegung und/oder eine Demontagebewegung des Werkstücks in Bezug auf den Werkstückhalter steuert; wobei der Speicherabschnitt den von dem Bewegungsmuster-Erfassungsabschnitt erfassten Bewegungsmuster-Steuerwert auf eine Weise speichert, dass er als der Satz erfasster Daten mit der Werkstück-Merkmalsinformation, der Relativpositionsinformation zwischen dem Werkstück und dem Werkstückhalter sowie der Relativpositionsinformation zwischen dem Werkstück und der Hand korreliert wird.

3. Roboter-Programmiervorrichtung nach Anspruch 1, ferner mit einem Fingerspitzenform-Erfassungsabschnitt (40), der dreidimensionale Formdaten (38) einer Fingerspitze der Hand erfasst; wobei der Speicherabschnitt die von dem Fingerspitzenform-Erfassungsabschnitt erfassten dreidimensionalen Formdaten der Fingerspitze der Hand auf eine Weise speichert, dass sie als der Satz erfasster Daten mit der Werkstück-Merkmalsinformation, der Relativpositionsinformation zwischen dem Werkstück und dem Werkstückhalter sowie der Relativpositionsinformation zwischen dem Werkstück und der Hand korreliert werden.

4. Roboter-Programmiervorrichtung nach Anspruch 1, ferner mit einem Handzeichnungs-Erfassungsabschnitt (44), der Zeichnungsdaten (42) der Hand erfasst; wobei der Speicherabschnitt die von dem Handzeichnungs-Erfassungsabschnitt erfassten Zeichnungsdaten der Hand auf eine Weise speichert, dass sie als der Satz erfasster Daten mit der Werkstück-Merkmalsinformation, der Relativpositionsinformation zwischen dem Werkstück und dem Werkstückhalter sowie der Relativpositionsinformation zwischen dem Werkstück und der Hand korreliert werden.

5. Roboter-Programmiervorrichtung nach Anspruch 1, ferner mit einem Halterzeichnungs-Erfassungsabschnitt (48), der Zeichnungsdaten (46) des Werkstückhalters erfasst; wobei der Speicherabschnitt die von dem Halterzeichnungs-Erfassungsabschnitt erfassten Zeichnungsdaten des Werkstückhalters auf eine Weise speichert, dass sie als der Satz erfasster Daten mit der Werkstück-Merkmalsinformation, der Relativpositionsinformation zwischen dem Werkstück und dem Werkstückhalter sowie der Relativpositionsinformation zwischen dem Werkstück und der Hand korreliert werden.

6. Roboter-Programmiervorrichtung nach Anspruch 1, ferner mit einem Werkstückform-Erfassungsabschnitt (52), der dreidimensionale Formdaten (50) des Werkstücks erfasst; wobei der Speicherabschnitt die von dem Werkstückform-Erfassungsabschnitt erfassten dreidimensionalen Formdaten auf eine Weise speichert, dass sie als der Satz erfasster Daten mit der Werkstück-Merkmalsinformation, der Relativpositionsinformation zwischen dem Werkstück und dem Werkstückhalter sowie der Relativpositionsinformation zwischen dem Werkstück und der Hand korreliert werden; und wobei der Programm-Generierungsabschnitt die Relativpositionsinformation zwischen dem Werkstück und dem Werkstückhalter und die Relativpositionsinformation zwischen dem Werkstück und der Hand, die beide in den von dem Abrufabschnitt für erfasste Daten abgerufenen, erfassten Optimaldaten enthalten sind, auf der Basis eines Unterschieds zwischen den in den erfassten Optimaldaten enthaltenen dreidimensionalen Formdaten des Werkstücks und den dreidimensionalen Formdaten (54) des neuen Werkstücks korrigiert, und das Transportvorgangs-Programm für das neue Werkstück unter Verwendung dieser beiden korrigierten Versionen von Relativpositionsinformation generiert.

7. Roboter-Programmiervorrichtung nach Anspruch 1, wobei der Werkstück-Merkmal-Erfassungsabschnitt als die Werkstück-Merkmalsinformation eine Werkstückform-Übergangsinformation (12T) erfasst, welche eine Änderung in einer Form des Werkstücks in Art einer Zeitreihe darstellt; und wobei der Abrufabschnitt für erfasste Daten die erfassten Optimaldaten abruft, indem er als die Merkmalsinformation über das neue Werkstück eine neue Werkstückform-Übergangsinformation (26T) verwendet, welche eine Änderung in einer Form des neuen Werkstücks in Art einer Zeitreihe darstellt.

8. Roboter-Programmiervorrichtung nach Anspruch 7 zum Erstellen des Transportvorgangs-Programms, in dem ein Bearbeitungsvorgang für das Werkstück in einer Zeitspanne während des Werkstück-Transportvorgangs durchgeführt wird, wobei die Werkstückform-Übergangsinformation geometrische Merkmale in mehreren unterschiedlichen Stufen einschließlich Stufen vor und nach Bearbeitung des Werkstücks darstellt.

9. Roboter-Programmierverfahren zum Erstellen, mittels eines Computers, eines Transportvorgangs-Programms, um einen Roboter mit einer daran angebrachten Hand zur Ausführung eines Werkstück-Transportvorgangs zu veranlassen, wobei der Werkstück-Transportvorgang eine Montagebewegung und/oder eine Demontagebewegung für ein Werkstück in Bezug auf einen Werkstückhalter beinhaltet, wobei das Verfahren umfasst:
Erfassen von Werkstück-Merkmalsinformation (12), welche ein geometrisches Merkmal eines Werkstücks aus dreidimensionalen Formdaten des Werkstücks darstellt, durch einen Werkstück-Merkmal-Erfassungsabschnitt (14) eines Computers;
Erfassen von Relativpositionsinformation (16) zwischen einem Werkstück und einem Werkstückhalter zu einem Zeitpunkt, zu dem das Werkstück am Werkstückhalter angebracht wird, durch einen Halterposition-Erfassungsabschnitt (18) eines Computers; und
Erfassen von Relativpositionsinformation (20) zwischen einem Werkstück und einer Hand zu einem Zeitpunkt, zu dem die Hand das Werkstück hält, durch einen Handposition-Erfassungsabschnitt (22) eines Computers;
**gekennzeichnet dadurch, dass** es ferner folgende Schritte umfasst:
Speichern, durch einen Speicherabschnitt (24) eines Computers, der von dem Werkstück-Merkmal-Erfassungsabschnitt erfassten Werkstück-Merkmalsinformation, der von dem Halterpositions-Erfassungsabschnitt erfassten Relativpositionsinformation zwischen dem Werkstück und dem Werkstückhalter, sowie der von dem Handposition-Erfassungsabschnitt erfassten Relativpositionsinformation zwischen dem Werkstück und der Hand als einen Satz erfasster Daten (D), der durch Korrelieren dieser drei Informationstypen zueinander definiert ist, und auch Speichern mehrerer Sätze der erfassten Daten bezüglich mehrerer Typen von Werkstücken;
Abrufen, durch einen Abrufabschnitt (28) für erfasste Daten eines Computers, erfasster Optimaldaten (SD) aus den in dem Speicherabschnitt gespeicherten mehreren Sätzen erfasster Daten, indem aus Daten der dreidimensionalen Form eines neuen Werkstücks erfasste Merkmalsinformation (26) über das neue Werkstück verwendet wird, wobei die erfassten Optimaldaten die Werkstück-Merkmalsinformation, die einen höchsten Grad an Koinzidenz mit der Merkmalsinformation über das neue Werkstück aufweist, enthalten; und
Generieren, durch einen Programm-Generierungsabschnitt (32) eines Computers, eines Transportvorgangs-Programms (30) für das neue Werkstück unter Verwendung der erfassten Optimaldaten, die von dem Abrufabschnitt für erfasste Daten abgerufen wurden.

10. Programm für eine Roboter-Programmierung, das zum Erstellen eines Transportvorgangs-Programms verwendet wird, um einen Roboter mit einer daran angebrachten Hand zur Ausführung eines Werkstück-Transportvorgangs zu veranlassen, der eine Montagebewegung und/oder eine Demontagebewegung für ein Werkstück in Bezug auf einen Werkstückhalter beinhaltet, wobei das Programm eine Computerfunktion ausführt, die zum Durchführen des Verfahrens nach Anspruch 9 konfiguriert ist.

11. Computerlesbares Aufzeichnungsmedium, das zum Erstellen eines Transportvorgangs-Programms verwendet wird, um einen Roboter mit einer daran angebrachten Hand zur Ausführung eines Werkstück-Transportvorgangs zu veranlassen, wobei der Werkstück-Transportvorgang eine Montagebewegung und/oder eine Demontagebewegung für ein Werkstück in Bezug auf einen Werkstückhalter beinhaltet, wobei das Aufzeichnungsmedium ein Programm für eine Roboter-Programmierung nach Anspruch 10 aufzeichnet.

## Revendications

1. Dispositif de programmation de robot pour préparer un programme d'opération de transport pour faire en sorte qu'un robot ayant une main fixée à celui-ci exécute une opération de transport de pièce, l'opération de transport de pièce incluant au moins l'un d'un mouvement de montage et d'un mouvement de démontage pour une pièce par rapport à un dispositif de maintien de pièce, comprenant :
une section d'obtention de caractéristique de pièce (14) obtenant une information de caractéristique de pièce (12) représentent une caractéristique géométrique d'une pièce à partir de données de forme tridimensionnelle de la pièce ;
une section d'obtention de position de dispositif de maintien (18) obtenant une information de position relative (16) entre une pièce et un dispositif de maintien de pièce à un instant où la pièce est montée sur le dispositif de maintien de pièce ; et
une section d'obtention de position de main (22) obtenant une information de position relative (20) entre une pièce et une main à un instant où la main tient la pièce ;
le dispositif de programmation de robot **caractérisé en ce que** comprenant en outre une section de stockage (24) stockant ladite information de caractéristique de pièce obtenue par ladite section d'obtention de caractéristique de pièce, ladite information de position relative entre la pièce et le dispositif de maintien de pièce obtenue par ladite section d'obtention de position de dispositif de maintien et ladite information de position relative entre la pièce et la main obtenue par ladite section d'obtention de position de main, comme un ensemble de données obtenues (D) défini par corrélation de ces trois types d'information les uns avec les autres, et stockant également une pluralité d'ensembles desdites données obtenues pour ce qui concerne une pluralité de types de pièces ;
une section de récupération de données obtenues (28) récupérant des données obtenues (D) optimales parmi ladite pluralité d'ensembles de données obtenues stockées dans ladite section de stockage, en utilisant une information de caractéristique de nouvelle pièce (26) obtenue à partir de données de forme tridimensionnelle d'une nouvelle pièce, lesdites données obtenues optimales incluant ladite information de caractéristique de pièce ayant un degré le plus élevé de coïncidence avec ladite information de caractéristique de nouvelle pièce ; et
une section de génération de programme (32) générant un programme d'opération de transport (30) pour la nouvelle pièce en utilisant lesdites données obtenues optimales récupérées par ladite section de récupération de données obtenues.

2. Dispositif de programmation de robot selon la revendication 1, comprenant en outre une section d'obtention de schéma de mouvement (36) obtenant une valeur de commande de schéma de mouvement (34) commandant au moins l'un d'un mouvement de montage et d'un mouvement de démontage pour la pièce par rapport au dispositif de maintien de pièce ; dans lequel ladite section de stockage stocke ladite valeur de commande de schéma de mouvement obtenue par ladite section d'obtention de schéma de mouvement de manière à ce qu'elle soit corrélée, comme ledit ensemble de données obtenues, avec ladite information de caractéristique de pièce, ladite information de position relative entre la pièce et le dispositif de maintien de pièce et ladite information de position relative entre la pièce et la main.

3. Dispositif de programmation de robot selon la revendication 1, comprenant en outre une section d'obtention de forme de doigt (40) obtenant des données de forme tridimensionnelle (38) d'un doigt de la main ; dans lequel ladite section de stockage stocke lesdites données de forme tridimensionnelle du doigt de la main obtenues par ladite section d'obtention de forme de doigt de manière à ce qu'elles soient corrélées, comme ledit ensemble de données obtenues, avec ladite information de caractéristique de pièce, ladite information de position relative entre la pièce et le dispositif de maintien de pièce et ladite information de position relative entre la pièce et la main.

4. Dispositif de programmation de robot selon la revendication 1, comprenant en outre une section d'obtention de dessin de main (44) obtenant des données de dessin (42) de la main ; dans lequel ladite section de stockage stocke lesdites données de dessin de la main obtenues par ladite section d'obtention de dessin de main de manière à ce qu'elles soient corrélées, comme ledit ensemble de données obtenues, avec ladite information de caractéristique de pièce, ladite information de position relative entre la pièce et le dispositif de maintien de pièce et ladite information de position relative entre la pièce et la main.

5. Dispositif de programmation de robot selon la revendication 1, comprenant en outre une section d'obtention de dessin de dispositif de maintien (48) obtenant des données de dessin (46) de dispositif de maintien ; dans lequel ladite section de stockage stocke lesdites données de dessin de dispositif de maintien obtenues par ladite section d'obtention de dessin de dispositif de maintien de manière à ce qu'elles soient corrélées, comme ledit ensemble de données obtenues, avec ladite information de caractéristique de pièce, ladite information de position relative entre la pièce et le dispositif de maintien de pièce et ladite information de position relative entre la pièce et la main.

6. Dispositif de programmation de robot selon la revendication 1, comprenant en outre une section d'obtention de données de forme de pièce (52) obtenant des données de forme tridimensionnelle (50) de la pièce ; dans lequel ladite section de stockage stocke lesdites données de forme tridimensionnelle de la pièce obtenues par ladite section d'obtention de données de forme de pièce de manière à ce qu'elles soient corrélées, comme ledit ensemble de données obtenues, avec ladite information de caractéristique de pièce, ladite information de position relative entre la pièce et le dispositif de maintien de pièce et ladite information de position relative entre la pièce et la main ; et dans lequel ladite section de génération de programme corrige ladite information de position relative entre la pièce et le dispositif de maintien de pièce et ladite information de position relative entre la pièce et la main, toutes deux incluses dans lesdites données obtenues optimales récupérées par ladite section de récupération de données obtenues, sur la base d'une différence entre lesdites données de forme tridimensionnelle de la pièce incluses dans lesdites données obtenues optimales et les données de forme tridimensionnelle (54) de la nouvelle pièce, et génère ledit programme d'opération de transport pour la nouvelle pièce en utilisant ces deux versions corrigées des informations de position relative.

7. Dispositif de programmation de robot selon la revendication 1, dans lequel ladite section d'obtention de caractéristique de pièce obtient, comme ladite information de caractéristique de pièce, une information de transition de forme de pièce (12T) représentant un changement d'une forme de la pièce d'une manière en série dans le temps ; et dans lequel ladite section de récupération de données obtenues récupère lesdites données obtenues optimales en utilisant, comme ladite information de caractéristique de nouvelle pièce, une nouvelle information de transition de forme de pièce (26T) représentant un changement d'une forme de la nouvelle pièce d'une manière en série dans le temps.

8. Dispositif de programmation de robot selon la revendication 7, adapté à préparer ledit programme d'opération de transport dans lequel un travail de traitement pour la pièce est effectué lors d'une période pendant ladite opération de transport de pièce, dans lequel ladite information de transition de forme de pièce représente des caractéristiques géométriques dans une pluralité d'étapes différentes incluant des étapes avant et après le traitement de la pièce.

9. Procédé de programmation de robot pour préparer, en utilisant un ordinateur, un programme d'opération de transport pour faire en sorte qu'un robot ayant une main fixée à celui-ci exécute une opération de transport de pièce, l'opération de transport de pièce incluant au moins l'un d'un mouvement de montage et d'un mouvement de démontage pour une pièce par rapport à un dispositif de maintien de pièce, ledit procédé comprenant :
l'obtention, par une section d'obtention de caractéristique de pièce (14) d'un ordinateur, d'une information de caractéristique de pièce (12) représentent une caractéristique géométrique d'une pièce à partir de données de forme tridimensionnelle de la pièce ;
l'obtention, par une section d'obtention de position de dispositif de maintien (18) d'un ordinateur, d'une information de position relative (16) entre une pièce et un dispositif de maintien de pièce à un instant où la pièce est montée sur le dispositif de maintien de pièce ;
l'obtention, par une section d'obtention de position de main (22) d'un ordinateur, d'une information de position relative (20) entre une pièce et une main à un instant où la main tient la pièce ;
**caractérisé en ce que** comprenant en outre les étapes de stockage, par une section de stockage (24) d'un ordinateur, de ladite information de caractéristique de pièce obtenue par ladite section d'obtention de caractéristique de pièce, de ladite information de position relative entre la pièce et le dispositif de maintien de pièce obtenue par ladite section d'obtention de position de dispositif de maintien et de ladite information de position relative entre la pièce et la main obtenue par ladite section d'obtention de position de main, comme un ensemble de données obtenues (D) défini par corrélation de ces trois types d'information les uns avec les autres, et également de stockage d'une pluralité d'ensembles desdites données obtenues pour ce qui concerne une pluralité de types de pièces ;
de récupération, par une section de récupération de données obtenues (28) d'un ordinateur, de données obtenues (SD) optimales, parmi ladite pluralité d'ensembles de données obtenues stockées dans ladite section de stockage, en utilisant une information de caractéristique de nouvelle pièce (26) obtenue à partir de données de forme tridimensionnelle d'une nouvelle pièce, lesdites données obtenues optimales incluant ladite information de caractéristique de pièce ayant un degré le plus élevé de coïncidence avec ladite information de caractéristique de nouvelle pièce ; et
de génération, par une section de génération de programme (32) d'un ordinateur, d'un programme d'opération de transport (30) pour la nouvelle pièce en utilisant lesdites données obtenues optimales récupérées par ladite section de récupération de données obtenues.

10. Programme pour une programmation de robot, utilisé pour préparer un programme d'opération de transport pour faire en sorte qu'un robot ayant une main fixée à celui-ci exécute une opération de transport de pièce incluant au moins l'un d'un mouvement de montage et d'un mouvement de démontage pour une pièce par rapport à un dispositif de maintien de pièce, ledit programme faisant fonctionner un ordinateur configuré pour mettre en oeuvre le procédé selon la revendication 9.

11. Support d'enregistrement lisible par un ordinateur, utilisé pour préparer un programme d'opération de transport pour faire en sorte qu'un robot ayant une main fixée à celui-ci exécute une opération de transport de pièce incluant au moins l'un d'un mouvement de montage et d'un mouvement de démontage pour une pièce par rapport à un dispositif de maintien de pièce, ledit support d'enregistrement enregistrant un programme pour une programmation de robot selon la revendication 10.
